# EUROPEAN PATENT APPLICATION

(11) **EP 1 271 557 A2**
(43) Date of publication of application: **02.01.2003**
(21) Application number: 02013628.9
(22) Date of filing: 19.06.2002
(51) Int. Cl.: G21K 4/00

(54) **Stimulable phosphor sheet and method for manufacturing the same**

(30) Priority: 20.06.2001 JP 2001186265
(71) Applicant: FUJI PHOTO FILM CO., LTD., Kanagawa (JP)
(72) Inventor: Neriishi, Keiko, Ashigarakami-gun, Kanagawa (JP); Kohda, Katsuhiro, Ashigarakami-gun, Kanagawa (JP); Hosoi, Yuichi, Ashigarakami-gun, Kanagawa (JP)
(74) Representative: Klunker . Schmitt-Nilson . Hirsch

(57) **Abstract**

A stimulable phosphor sheet is formed with a plurality of stimulable phosphor layer regions formed by pressing a stimulable phosphor membrane containing stimulable phosphor and a binder into a plurality of through-holes formed in a plate-like member to form the plurality of stimulable phosphor layer regions at positions corresponding to those of the plurality of through-holes of the plate-like member. According to the thus constituted stimulabple phosphor sheet, it is possible to read radiation data or chemiluminescence data and produce biochemical analysis data having excellent quantitative characteristics with high resolution even in the case of forming at a high density in a carrier a plurality of spot-like regions selectively labeled with a radioactive labeling substance, thereby recording radiation data therein or in the case of forming at a high density in a carrier a plurality of spot-like regions selectively labeled with a labeling substance which generates chemiluminescence emission when it contacts a chemiluminescent substrate, thereby recording chemiluminescence data therein.

## Description

### BACKGROUND OF THE INVENTION

The present invention relates to a stimulable phosphor sheet and a method for manufacturing the same and, particularly, to a stimulable phosphor sheet and a method for producing the same which can read radiation data or chemiluminescence data and produce biochemical analysis data having excellent quantitative characteristics with high resolution even in the case of forming at a high density on the surface of a carrier such as a membrane filter a plurality of spot-like regions containing specific binding substances which can specifically bind with a substance derived from a living organism and whose sequence, base length, composition and the like are known and selectively labeling the plurality of spot-like regions with a radioactive labeling substance, thereby recording radiation data therein or in the case of forming at a high density on the surface of a carrier such as a membrane filter a plurality of spot-like regions containing specific binding substances which can specifically bind with a substance derived from a living organism and whose sequence, base length, composition and the like are known and selectively labeling the plurality of spot-like regions with a labeling substance which generates chemiluminescence emission when it contacts a chemiluminescent substrate, thereby recording chemiluminescence data therein.

### DESCRIPTION OF THE PRIOR ART

An autoradiographic analyzing system using as a detecting material for detecting radiation a stimulable phosphor which can absorb, store and record the energy of radiation when it is irradiated with radiation and which, when it is then stimulated by an electromagnetic wave having a specified wavelength, can release stimulated emission whose light amount corresponds to the amount of radiation with which it was irradiated is known, which comprises the steps of introducing a radioactively labeled substance into an organism, using the organism or a part of the tissue of the organism as a specimen, superposing the specimen and a stimulable phosphor sheet formed with a stimulable phosphor layer for a certain period of time, storing and recording radiation energy in a stimulable phosphor contained in the stimulable phosphor layer, scanning the stimulable phosphor layer with an electromagnetic wave to excite the stimulable phosphor, photoelectrically detecting the stimulated emission released from the stimulable phosphor to produce digital image signals, effecting image processing on the obtained digital image signals, and reproducing an image on displaying means such as a CRT or the like or a photographic film (see, for example, Japanese Patent Publication No. 1-60784, Japanese Patent Publication No. 1-60782, Japanese Patent Publication No. 4-3952 and the like).

There is further known chemiluminescence analysis system comprising the steps of employing, as a detecting material for light, a stimulable phosphor which can absorb and store the energy of light upon being irradiated therewith and release a stimulated emission whose amount is proportional to that of the received light upon being stimulated with an electromagnetic wave having a specific wavelength range, selectively labeling a fixed high molecular substance such as a protein or a nucleic acid sequence with a labeling substance which generates chemiluminescence emission when it contacts a chemiluminescent substance, contacting the high molecular substance selectively labeled with the labeling substance and the chemiluminescent substance, storing and recording the chemiluminescence emission in the wavelength of visible light generated by the contact of the chemiluminescent substance and the labeling substance in the stimulable phosphor contained in a stimulable phosphor layer formed on a stimulable phosphor sheet, scanning the stimulable phosphor layer with an electromagnetic wave to excite the stimulable phosphor, photoelectrically detecting the stimulated emission released from the stimulable phosphor to produce digital signals, effecting data processing on the obtained digital signals, and reproducing data on displaying means such as a CRT or a recording material such as a photographic film (see for example, U.S. Patent No. 5,028,793, UK Patent Application 2,246,197 A and the like).

Unlike the system using a photographic film, according to these systems using the stimulable phosphor as a detecting material, development, which is chemical processing, becomes unnecessary. Further, it is possible reproduce a desired image by effecting image processing on the obtained image data and effect quantitative analysis using a computer. Use of a stimulable phosphor in these processes is therefore advantageous.

On the other hand, a fluorescence analyzing system using a fluorescent substance as a labeling substance instead of a radioactive labeling substance in the autoradiographic analyzing system is known. According to this system, it is possible to study a genetic sequence, study the expression level of a gene, and to effect separation or identification of protein or estimation of the molecular weight or properties of protein or the like. For example, this system can perform a process including the steps of distributing a plurality of DNA fragments on a gel support by means of electrophoresis after a fluorescent dye was added to a solution containing a plurality of DNA fragments to be distributed, or distributing a plurality of DNA fragments on a gel support containing a fluorescent dye, or dipping a gel support on which a plurality of DNA fragments have been distributed by means of electrophoresis in a solution containing a fluorescent dye, thereby labeling the electrophoresed DNA fragments, exciting the fluorescent dye by a stimulating ray to cause it to release fluorescence emission, detecting the released fluorescence emission to produce an image and detecting the distribution of the DNA fragments on the gel support. This system can also perform a process including the steps of distributing a plurality of DNA fragments on a gel support by means of electrophoresis, denaturing the DNA fragments, transferring at least a part of the denatured DNA fragments onto a transfer support such as a nitrocellulose support by the Southern-blotting method, hybridizing a probe prepared by labeling target DNA and DNA or RNA complementary thereto with the denatured DNA fragments, thereby selectively labeling only the DNA fragments complementary to the probe DNA or probe RNA, exciting the fluorescent dye by a stimulating ray to cause it to release fluorescence emission, detecting the released fluorescence emission to produce an image and detecting the distribution of the target DNA on the transfer support. This system can further perform a process including the steps of preparing a DNA probe complementary to DNA containing a target gene labeled by a labeling substance, hybridizing it with DNA on a transfer support, combining an enzyme with the complementary DNA labeled by a labeling substance, causing the enzyme to contact a fluorescent substance, transforming the fluorescent substance to a fluorescent substance having fluorescence emission releasing property, exciting the thus produced fluorescent substance by a stimulating ray to release fluorescence emission, detecting the fluorescence emission to produce an image and detecting the distribution of the target DNA on the transfer support. This fluorescence detecting system is advantageous in that a genetic sequence or the like can be easily detected without using a radioactive substance.

Similarly, there is known a chemiluminescence detecting system comprising the steps of fixing a substance derived from a living organism such as a protein or a nucleic acid sequence on a support, selectively labeling the substance derived from a living organism with a labeling substance which generates chemiluminescence emission when it contacts a chemiluminescent substrate, contacting the substance derived from a living organism and selectively labeled with the labeling substance and the chemiluminescent substrate, photoelectrically detecting the chemiluminescence emission in the wavelength of visible light generated by the contact of the chemiluminescent substrate and the labeling substance to produce digital image signals, effecting image processing thereon, and reproducing a chemiluminescent image on a display means such as a CRT or a recording material such as a photographic film, thereby obtaining information relating to the high molecular substance such as genetic information

Further, a micro-array analyzing system has been recently developed, which comprises the steps of using a spotting device to drop at different positions on the surface of a carrier such as a slide glass plate, a membrane filter or the like specific binding substances which can specifically bind with a substance derived from a living organism such as a cell, virus, hormone, tumor marker, enzyme, antibody, antigen, abzyme, other protein, a nuclear acid, cDNA, DNA, RNA or the like and whose sequence, base length, composition and the like are known, thereby forming a number of independent spots, specifically binding the specific binding substances using a hybridization method or the like with a substance derived from a living organism such as a cell, virus, hormone, tumor marker, enzyme, antibody, antigen, abzyme, other protein, a nuclear acid, cDNA, DNA or mRNA by extraction, isolation or the like and optionally further subjected to chemical processing, chemical modification or the like and which is labeled with a labeling substance such as a fluorescent substance, dye or the like, thereby forming a micro-array, irradiating the micro-array with a stimulating ray, photoelectrically detecting light such as fluorescence emission released from a labeling substance such as a fluorescent substance, dye or the like, and analyzing the substance derived from a living organism. This micro-array analyzing system is advantageous in that a substance derived from a living organism can be analyzed in a short time period by forming a number of spots of specific binding substances at different positions of the surface of a carrier such as a slide glass plate at high density and hybridizing them with a substance derived from a living organism and labeled with a labeling substance.

In addition, a macro-array analyzing system using a radioactive labeling substance as a labeling substance has been further developed, which comprises the steps of using a spotting device to drop at different positions on the surface of a carrier such as a membrane filter or the like specific binding substances which can specifically bind with a substance derived from a living organism such as a cell, virus, hormone, tumor marker, enzyme, antibody, antigen, abzyme, other protein, a nuclear acid, cDNA, DNA, RNA or the like and whose sequence, base length, composition and the like are known, thereby forming a number of independent spots, specifically binding the specific binding substance using a hybridization method or the like with a substance derived from a living organism such as a cell, virus, hormone, tumor marker, enzyme, antibody, antigen, abzyme, other protein, a nuclear acid, cDNA, DNA or mRNA by extraction, isolation or the like and optionally further subjected to chemical processing, chemical modification or the like and which is labeled with a radioactive labeling substance, thereby forming a macro-array, superposing the macro-array and a stimulable phosphor sheet formed with a stimulable phosphor layer, exposing the stimulable phosphor layer to the radioactive labeling substance, irradiating the stimulable phosphor layer with a stimulating ray to excite the stimulable phosphor, photoelectrically detecting the stimulated emission released from the stimulable phosphor to produce biochemical analysis data, and analyzing the substance derived from a living organism.

However, in the macro-array analyzing system using a radioactive labeling substance as a labeling substance, when the stimulable phosphor layer is exposed to a radioactive labeling substance, since the radiation energy of the radioactive labeling substance contained in spot-like regions formed on the surface of a carrier such as a membrane filter is very large, electron beams (β rays) released from the radioactive labeling substance contained in the individual spot-like regions are scattered in the carrier such as a membrane filter, thereby impinging on regions of the stimulable phosphor layer that should be exposed only to the radioactive labeling substance contained in neighboring spot-like regions, or electron beams released from the radioactive labeling substance adhering to the surface of the carrier such as a membrane filter between neighboring spot-like regions impinge on the stimulable phosphor layer, to generate noise in biochemical analysis data produced by photoelectrically detecting stimulated emission, thus making data of neighboring spot-like regions hard to separate and lowering resolution, and to lower the accuracy of biochemical analysis when a substance derived from a living organism is analyzed by quantifying the radiation amount of each spot-like region. The degradation of the resolution and accuracy of biochemical analysis is particularly pronounced when spot-like regions are formed close to each other at high density.

Furthermore, in the field of biochemical analysis, it is often required to analyze a substance derived from a living organism by forming at different positions on the surface of a carrier such as a membrane filter or the like a plurality of spot-like regions containing specific binding substances which can specifically bind with a substance derived from a living organism such as a cell, virus, hormone, tumor marker, enzyme, antibody, antigen, abzyme, other protein, a nuclear acid, cDNA, DNA, RNA or the like and whose sequence, base length, composition and the like are known, specifically binding, using a hybridization method or the like, the specific binding substances contained in the plurality of spot-like regions with a substance derived from a living organism labeled with a labeling substance which generates chemiluminescence emission when it contacts a chemiluminescent substrate, thereby selectively labeling the plurality of spot-like regions, causing the plurality of spot-like regions to come into contact with a chemiluminescent substrate, exposing a stimulable phosphor layer to chemiluminescence emission in the wavelength of visible light generated by the contact of the chemiluminescent substance and the labeling substance, thereby storing the energy of chemiluminescence emission in the stimulable phosphor layer, irradiating the stimulable phosphor layer with a stimulating ray, and photoelectrically detecting stimulated emission released from the stimulable phosphor layer, thereby effecting biochemical analysis. In this case, chemiluminescence emission released from any particular spot-like region is scattered in the carrier such as a membrane filter, thereby impinging on regions of the stimulable phosphor layer that should be exposed only to the chemiluminescence emission released from neighboring spot-like regions to generate noise in biochemical analysis data produced by photoelectrically detecting stimulated emission, thus making data of neighboring spot-like regions hard to separate and lowering resolution, and to lower the quantitative characteristics of biochemical analysis data.

### SUMMARY OF THE INVENTION

It is therefore an object of the present invention to provide a stimulable phosphor sheet and a method for producing the same, which stimulable phosphor sheet can read radiation data or chemiluminescence data and produce biochemical analysis data having excellent quantitative characteristics with high resolution even in the case of forming at a high density on the surface of a carrier such as a membrane filter a plurality of spot-like regions containing specific binding substances which can specifically bind with a substance derived from a living organism and whose sequence, base length, composition and the like are known and selectively labeling the plurality of spot-like regions with a radioactive labeling substance, thereby recording radiation data therein or in the case of forming at a high density on the surface of a carrier such as a membrane filter a plurality of spot-like regions containing specific binding substances which can specifically bind with a substance derived from a living organism and whose sequence, base length, composition and the like are known and selectively labeling the plurality of spot-like regions with a labeling substance which generates chemiluminescence emission when it contacts a chemiluminescent substrate, thereby recording chemiluminescence data therein.

The above and other objects of the present invention can be accomplished by a stimulable phosphor sheet formed with a plurality of stimulable phosphor layer regions formed by charging a stimulable phosphor membrane containing stimulable phosphor and a binder into a plurality of through-holes formed in a plate-like member to form the plurality of stimulable phosphor layer regions at positions corresponding to those of the plurality of through-holes of the plate-like member.

According to the present invention, even in the case where a plurality of spot-like regions selectively labeled with a radioactive labeling substance by specifically binding specific binding substances whose sequence, base length, composition and the like are known and a substance derived from a living organism are formed in a biochemical analysis unit such as a membrane filter at a high density, if a stimulable phosphor sheet is prepared to have a plurality of stimulable phosphor layer regions formed in the same pattern as that of the spot-like regions formed in the biochemical analysis unit by charging a stimulable phosphor membrane containing stimulable phosphor and a binder into a plurality of through-holes formed in a plate-like member to form the plurality of stimulable phosphor layer regions at positions corresponding to those of the plurality of through-holes of the plate-like member, electron beams (β rays) released from the radioactive labeling substance contained in the individual spot-like regions when the stimulable phosphor sheet is superposed on the biochemical analysis unit to expose the plurality of stimulable phosphor layer regions of the stimulable phosphor sheet to the radioactive labeling substance selectively contained in the plurality of spot-like regions of the biochemical analysis unit can be effectively prevented from entering stimulable phosphor layer regions other than that to be exposed to electron beams (β rays) released from the radioactive labeling substance contained in the spot-like region and, therefore, it is possible to produce biochemical analysis data having an excellent quantitative characteristic with high resolution by scanning the plurality of the thus exposed stimulable phosphor layer regions with a stimulating ray and photoelectrically detecting stimulated emission released from the plurality of stimulable phosphor layer regions.

Further, according to the present invention, even in the case where a plurality of spot-like regions selectively labeled with a labeling substance which generates chemiluminescence emission when it contacts a chemiluminescent substrate are formed in a biochemical analysis unit such as membrane filter unit at a high density, if a stimulable phosphor sheet is prepared to have a plurality of stimulable phosphor layer regions formed in the same pattern as that of the spot-like regions formed in the biochemical analysis unit by charging a stimulable phosphor membrane containing stimulable phosphor and a binder into a plurality of through-holes formed in a plate-like member to form the plurality of stimulable phosphor layer regions at positions corresponding to those of the plurality of through-holes of the plate-like member, chemiluminescence emission in the wavelength of visible light released from the individual spot-like regions of a biochemical analysis unit when the stimulable phosphor sheet is superposed on the biochemical analysis unit formed with the plurality of spot-like regions releasing chemiluminescence emission generated by the contact of the chemiluminescent substance and the labeling substance to expose the plurality of stimulable phosphor layer regions of the stimulable phosphor sheet to the chemiluminescence emission can be effectively prevented from entering stimulable phosphor layer regions other than that to be exposed to chemiluminescence emission released from the spot-like region and, therefore, it is possible to produce biochemical analysis data having an excellent quantitative characteristic with high resolution by scanning the plurality of the thus exposed stimulable phosphor layer regions with a stimulating ray and photoelectrically detecting stimulated emission released from the plurality of stimulable phosphor layer regions.

In the present invention, the case where a plurality of spot-like regions are selectively labeled with a labeling substance which generates chemiluminescence emission when it contacts a chemiluminescent substrate as termed herein includes the case where a plurality of spot-like regions are selectively labeled with a labeling substance which generates chemiluminescence emission when it contacts a chemiluminescent substrate by selectively binding a substance derived from a living organism and labeled with a labeling substance which generates chemiluminescence emission when it contacts a chemiluminescent substrate and the case where a plurality of spot-like regions are selectively labeled with a labeling substance which generates chemiluminescence emission when it contacts a chemiluminescent substrate by selectively binding a substance derived from a living organism and labeled with a hapten, and binding an antibody for the hapten labeled with an enzyme which generates chemiluminescence emission when it contacts a chemiluminescent substrate with the hapten by an antigen-antibody reaction.

In the present invention, illustrative examples of the combination of hapten and antibody include digoxigenin and anti-digoxigenin antibody, theophylline and anti-theophylline antibody, fluorosein and anti-fluorosein antibody, and the like. Further, the combination of biotin and avidin, antigen and antibody may be utilized instead of the combination of hapten and antibody.

In the present invention, a stimulable phosphor membrane as termed herein includes not only a sheet-like member containing stimulable phosphor and a binder but also a member containing stimulable phosphor and a binder and having any shape such as a block.

In a preferred aspect of the present invention, the plurality of stimulable phosphor layer regions are formed by pressing the stimulable phosphor membrane containing stimulable phosphor and a binder into the plurality of through-holes formed in the plate-like member.

According to this preferred aspect of the present invention, since the plurality of stimulable phosphor layer regions are formed simply by pressing the stimulable phosphor membrane containing stimulable phosphor and a binder into the plurality of through-holes formed in the plate-like member, it is possible to extremely easily manufacture a stimulable phosphor sheet formed with the plurality of stimulable phosphor layer regions.

In a further preferred aspect of the present invention, the plurality of stimulable phosphor layer regions are formed by pressing the stimulable phosphor membrane containing stimulable phosphor and a binder into the plurality of through-holes formed in the plate-like member using a heat press process.

According to this preferred aspect of the present invention, since the plurality of stimulable phosphor layer regions are formed simply by pressing the stimulable phosphor membrane containing stimulable phosphor and a binder into the plurality of through-holes formed in the plate-like member using a heat press process, it is possible to extremely easily manufacture a stimulable phosphor sheet formed with the plurality of stimulable phosphor layer regions.

In a further preferred aspect of the present invention, the plurality of stimulable phosphor layer regions are formed by pressing the stimulable phosphor membrane containing stimulable phosphor and a binder into the plurality of through-holes formed in the plate-like member using a calender roll process.

According to this preferred aspect of the present invention, since the plurality of stimulable phosphor layer regions are formed simply by pressing the stimulable phosphor membrane containing stimulable phosphor and a binder into the plurality of through-holes formed in the plate-like member using a calender roll process, it is possible to extremely easily manufacture a stimulable phosphor sheet formed with the plurality of stimulable phosphor layer regions.

In a further preferred aspect of the present invention, the plurality of stimulable phosphor layer regions are formed by pressing the stimulable phosphor membrane containing stimulable phosphor and a binder into the plurality of through-holes formed in the plate-like member and the plate-like member and the stimulable phosphor membrane are bonded with an adhesive agent.

According to this preferred aspect of the present invention, since the plurality of stimulable phosphor layer regions are formed by pressing the stimulable phosphor membrane containing stimulable phosphor and a binder into the plurality of through-holes formed in the plate-like member and the plate-like member and the stimulable phosphor membrane are bonded with an adhesive agent, a durable stimulable phosphor sheet can be manufactured by firmly integrating the plate-like member and the stimulable phosphor membrane.

The above other objects of the present invention can be accomplished by a method for manufacturing a stimulable phosphor sheet comprising the steps of forming a stimulable phosphor membrane containing stimulable phosphor and a binder and charging the stimulable phosphor membrane into a plurality of through-holes formed in a plate-like member, thereby forming a plurality of stimulable phosphor layer regions at positions corresponding to those of the plurality of through-holes.

According to the present invention, since a stimulable phosphor sheet is produced by forming a stimulable phosphor membrane containing stimulable phosphor and a binder and charging the stimulable phosphor membrane into a plurality of through-holes formed in a plate-like member, thereby forming a plurality of stimulable phosphor layer regions at positions corresponding to those of the plurality of through-holes, even in the case where a plurality of spot-like regions selectively labeled with a radioactive labeling substance by specifically binding specific binding substances whose sequence, base length, composition and the like are known and a substance derived from a living organism are formed in a biochemical analysis unit such as a membrane filter at a high density, if a stimulable phosphor sheet is prepared to have a plurality of stimulable phosphor layer regions formed in the same pattern as that of the spot-like regions formed in the biochemical analysis unit by charging a stimulable phosphor membrane containing stimulable phosphor and a binder into a plurality of through-holes formed in a plate-like member to form the plurality of stimulable phosphor layer regions at positions corresponding to those of the plurality of through-holes of the plate-like member, electron beams (β rays) released from the radioactive labeling substance contained in the individual spot-like regions when the stimulable phosphor sheet is superposed on the biochemical analysis unit to expose the plurality of stimulable phosphor layer regions of the stimulable phosphor sheet to the radioactive labeling substance selectively contained in the plurality of spot-like regions of the biochemical analysis unit can be effectively prevented from entering stimulable phosphor layer regions other than that to be exposed to electron beams (β rays) released from the radioactive labeling substance contained in the spot-like region and, therefore, it is possible to produce biochemical analysis data having an excellent quantitative characteristic with high resolution by scanning the plurality of the thus exposed stimulable phosphor layer regions with a stimulating ray and photoelectrically detecting stimulated emission released from the plurality of stimulable phosphor layer regions.

Further, according to the present invention, since a stimulable phosphor sheet is produced by forming a stimulable phosphor membrane containing stimulable phosphor and a binder and charging the stimulable phosphor membrane into a plurality of through-holes formed in a plate-like member, thereby forming a plurality of stimulable phosphor layer regions at positions corresponding to those of the plurality of through-holes, even in the case where a plurality of spot-like regions selectively labeled with a labeling substance which generates chemiluminescence emission when it contacts a chemiluminescent substrate are formed in a biochemical analysis unit such as membrane filter unit at a high density, if a stimulable phosphor sheet is prepared to have a plurality of stimulable phosphor layer regions formed in the same pattern as that of the spot-like regions formed in the biochemical analysis unit by charging a stimulable phosphor membrane containing stimulable phosphor and a binder into a plurality of through-holes formed in a plate-like member to form the plurality of stimulable phosphor layer regions at positions corresponding to those of the plurality of through-holes of the plate-like member, chemiluminescence emission in the wavelength of visible light released from the individual spot-like regions of a biochemical analysis unit when the stimulable phosphor sheet is superposed on the biochemical analysis unit formed with the plurality of spot-like regions releasing chemiluminescence emission generated by the contact of the chemiluminescent substance and the labeling substance to expose the plurality of stimulable phosphor layer regions of the stimulable phosphor sheet to the chemiluminescence emission can be effectively prevented from entering stimulable phosphor layer regions other than that to be exposed to chemiluminescence emission released from the spot-like region and, therefore, it is possible to produce biochemical analysis data having an excellent quantitative characteristic with high resolution by scanning the plurality of the thus exposed stimulable phosphor layer regions with a stimulating ray and photoelectrically detecting stimulated emission released from the plurality of stimulable phosphor layer regions.

In a preferred aspect of the present invention, the method for manufacturing a stimulable phosphor sheet comprises the step of pressing the stimulable phosphor membrane containing stimulable phosphor and a binder into the plurality of through-holes formed in the plate-like member and forming the plurality of stimulable phosphor layer regions.

According to this preferred aspect of the present invention, since the stimulable phosphor sheet is manufactured simply by pressing the stimulable phosphor membrane containing stimulable phosphor and a binder into the plurality of through-holes formed in the plate-like member and forming the plurality of stimulable phosphor layer regions, it is possible to extremely easily manufacture a stimulable phosphor sheet formed with the plurality of stimulable phosphor layer regions.

In a further preferred aspect of the present invention, the method for manufacturing a stimulable phosphor sheet comprises the step of pressing the stimulable phosphor membrane containing stimulable phosphor and a binder into the plurality of through-holes formed in the plate-like member using a heat press process and forming the plurality of stimulable phosphor layer regions.

According to this preferred aspect of the present invention, since the stimulable phosphor sheet is manufactured simply by pressing the stimulable phosphor membrane containing stimulable phosphor and a binder into the plurality of through-holes formed in the plate-like member using a heat press process and forming the plurality of stimulable phosphor layer regions, it is possible to extremely easily manufacture a stimulable phosphor sheet formed with the plurality of stimulable phosphor layer regions.

In a further preferred aspect of the present invention, the method for manufacturing a stimulable phosphor sheet comprises the step of pressing the stimulable phosphor membrane containing stimulable phosphor and a binder into the plurality of through-holes formed in the plate-like member using a calender roll process and forming the plurality of stimulable phosphor layer regions.

According to this preferred aspect of the present invention, since the stimulable phosphor sheet is manufactured simply by pressing the stimulable phosphor membrane containing stimulable phosphor and a binder into the plurality of through-holes formed in the plate-like member using a calender roll process and forming the plurality of stimulable phosphor layer regions, it is possible to extremely easily manufacture a stimulable phosphor sheet formed with the plurality of stimulable phosphor layer regions.

In a further preferred aspect of the present invention, the method for manufacturing a stimulable phosphor sheet comprises the step of pressing the stimulable phosphor membrane containing stimulable phosphor and a binder into the plurality of through-holes formed in the plate-like member, forming the plurality of stimulable phosphor layer regions and bonding the plate-like member and the stimulable phosphor membrane with an adhesive agent.

According to this preferred aspect of the present invention, since the stimulable phosphor sheet is manufactured by pressing the stimulable phosphor membrane containing stimulable phosphor and a binder into the plurality of through-holes formed in the plate-like member, forming the plurality of stimulable phosphor layer regions and bonding the plate-like member and the stimulable phosphor membrane with an adhesive agent, it is possible to manufacture a durable stimulable phosphor sheet by firmly integrating the plate-like member and the stimulable phosphor membrane.

In a preferred aspect of the present invention, the plate-like member of the stimulable phosphor sheet is made of a material capable of attenuating radiation energy.

According to this preferred aspect of the present invention, even in the case where a plurality of spot-like regions selectively labeled with a radioactive labeling substance by specifically binding specific binding substances whose sequence, base length, composition and the like are known and a substance derived from a living organism are formed in a biochemical analysis unit such as a membrane filter at a high density, if a stimulable phosphor sheet is prepared to have a plurality of stimulable phosphor layer regions formed in the same pattern as that of the spot-like regions formed in the biochemical analysis unit by charging a stimulable phosphor membrane containing stimulable phosphor and a binder into a plurality of through-holes formed in a plate-like member to form the plurality of stimulable phosphor layer regions at positions corresponding to those of the plurality of through-holes of the plate-like member, since the plate-like member is made of a material capable of attenuating radiation energy, electron beams (β rays) released from the radioactive labeling substance contained in the individual spot-like regions when the stimulable phosphor sheet is superposed on the biochemical analysis unit to expose the plurality of stimulable phosphor layer regions of the stimulable phosphor sheet to the radioactive labeling substance selectively contained in the plurality of spot-like regions of the biochemical analysis unit can be effectively prevented from scattering in the plate-like member of the stimulable phosphor sheet and entering a stimulable phosphor layer region to be exposed to electron beams (β rays) released from the radioactive labeling substance contained in neighboring spot-like regions. Therefore, since it is possible to effectively prevent stimulable phosphor layer regions to be exposed to electron beams (β rays) released from the radioactive labeling substance contained in the individual spot-like regions from being exposed to electron beams (β rays) released from the radioactive labeling substance contained in neighboring spot-like regions, it is possible to produce biochemical analysis data having an excellent quantitative characteristic with high resolution by scanning the plurality of the thus exposed stimulable phosphor layer regions with a stimulating ray and photoelectrically detecting stimulated emission released from the plurality of stimulable phosphor layer regions.

In a preferred aspect of the present invention, the plate-like member of the stimulable phosphor sheet is made of a material that reduces the energy of radiation to 1/5 or less when the radiation travels in the plate-like member by a distance equal to that between neighboring stimulable phosphor layer regions.

In a further preferred aspect of the present invention, the plate-like member of the stimulable phosphor sheet is made of a material that reduces the energy of radiation to 1/10 or less when the radiation travels in the plate-like member by a distance equal to that between neighboring stimulable phosphor layer regions.

In a further preferred aspect of the present invention, the plate-like member of the stimulable phosphor sheet is made of a material that reduces the energy of radiation to 1/50 or less when the radiation travels in the plate-like member by a distance equal to that between neighboring stimulable phosphor layer regions.

In a further preferred aspect of the present invention, the plate-like member of the stimulable phosphor sheet is made of a material that reduces the energy of radiation to 1/100 or less when the radiation travels in the plate-like member by a distance equal to that between neighboring stimulable phosphor layer regions.

In a further preferred aspect of the present invention, the plate-like member of the stimulable phosphor sheet is made of a material that reduces the energy of radiation to 1/500 or less when the radiation travels in the plate-like member by a distance equal to that between neighboring stimulable phosphor layer regions.

In a further preferred aspect of the present invention, the plate-like member of the stimulable phosphor sheet is made of a material that reduces the energy of radiation to 1/1,000 or less when the radiation travels in the plate-like member by a distance equal to that between neighboring stimulable phosphor layer regions.

In a preferred aspect of the present invention, the plate-like member of the stimulable phosphor sheet is made of a material capable of attenuating light energy.

According to this preferred aspect of the present invention, even in the case where a plurality of spot-like regions selectively labeled with a labeling substance which generates chemiluminescence emission when it contacts a chemiluminescent substrate are formed in a biochemical analysis unit such as membrane filter unit at a high density, if a stimulable phosphor sheet is prepared to have a plurality of stimulable phosphor layer regions formed in the same pattern as that of the spot-like regions formed in the biochemical analysis unit by charging a stimulable phosphor membrane containing stimulable phosphor and a binder into a plurality of through-holes formed in a plate-like member to form the plurality of stimulable phosphor layer regions at positions corresponding to those of the plurality of through-holes of the plate-like member, since the plate-like member is made of a material capable of attenuating light energy, chemiluminescence emission in the wavelength of visible light released from the individual spot-like regions of a biochemical analysis unit when the stimulable phosphor sheet is superposed on the biochemical analysis unit formed with the plurality of spot-like regions releasing chemiluminescence emission generated by the contact of the chemiluminescent substance and the labeling substance to expose the plurality of stimulable phosphor layer regions of the stimulable phosphor sheet to the chemiluminescence emission can be effectively prevented from scattering in the plate-like member and entering a stimulable phosphor layer region to be exposed to chemiluminescence emission released from neighboring spot-like regions. Therefore, since it is possible to effectively prevent stimulable phosphor layer regions to be exposed to chemiluminescence emission released from the individual spot-like regions from being exposed to chemiluminescence emission released from neighboring spot-like regions, it is possible to produce biochemical analysis data having an excellent quantitative characteristic with high resolution by scanning the plurality of the thus exposed stimulable phosphor layer regions with a stimulating ray and photoelectrically detecting stimulated emission released from the plurality of stimulable phosphor layer regions.

In a preferred aspect of the present invention, the plate-like member of the stimulable phosphor sheet is made of a material that reduces the energy of light to 1/5 or less when the light travels in the plate-like member by a distance equal to that between neighboring stimulable phosphor layer regions.

In a further preferred aspect of the present invention, the plate-like member of the stimulable phosphor sheet is made of a material that reduces the energy of light to 1/10 or less when the light travels in the plate-like member by a distance equal to that between neighboring stimulable phosphor layer regions.

In a further preferred aspect of the present invention, the plate-like member of the stimulable phosphor sheet is made of a material that reduces the energy of light to 1/50 or less when the light travels in the plate-like member by a distance equal to that between neighboring stimulable phosphor layer regions.

In a further preferred aspect of the present invention, the plate-like member of the stimulable phosphor sheet is made of a material that reduces the energy of light to 1/100 or less when the light travels in the plate-like member by a distance equal to that between neighboring stimulable phosphor layer regions.

In a further preferred aspect of the present invention, the plate-like member of the stimulable phosphor sheet is made of a material that reduces the energy of light to 1/500 or less when the light travels in the plate-like member by a distance equal to that between neighboring stimulable phosphor layer regions.

In a further preferred aspect of the present invention, the plate-like member of the stimulable phosphor sheet is made of a material that reduces the energy of light to 1/1,000 or less when the light travels in the plate-like member by a distance equal to that between neighboring stimulable phosphor layer regions.

In the present invention, the material for forming the plate-like member of the stimulable phosphor sheet is preferably capable of attenuating radiation energy and/or light energy but is not particularly limited. The material for forming the plate-like member of the stimulable phosphor sheet may be any type of inorganic compound material or organic compound material and the plate-like member of the stimulable phosphor sheet can preferably be formed of metal material, ceramic material or plastic material.

Illustrative examples of-inorganic compound materials preferably usable for forming the plate-like member of the stimulable phosphor sheet in the present invention include metals such as gold, silver, copper, zinc, aluminum, titanium, tantalum, chromium, iron, nickel, cobalt, lead, tin, selenium and the like; alloys such as brass, stainless steel, bronze and the like; silicon materials such as silicon, amorphous silicon, glass, quartz, silicon carbide, silicon nitride and the like; metal oxides such as aluminum oxide, magnesium oxide, zirconium oxide and the like; and inorganic salts such as tungsten carbide, calcium carbide, calcium sulfate, hydroxy apatite, gallium arsenide and the like. These may have either a monocrystal structure or a polycrystal sintered structure such as amorphous, ceramic or the like.

In the present invention, a high molecular compound can preferably be used as an organic compound material preferably usable for forming the plate-like member of the stimulable phosphor sheet. Illustrative examples of high molecular compounds preferably usable for forming the plate-like member of the stimulable phosphor sheet in the present invention include polyolefins such as polyethylene, polypropylene and the like; acrylic resins such as polymethyl methacrylate, polybutylacrylate/polymethyl methacrylate copolymer and the like; polyacrylonitrile; polyvinyl chloride; polyvinylidene chloride; polyvinylidene fluoride; polytetrafluoroethylene; polychlorotrifuluoroethylene; polycarbonate; polyesters such as polyethylene naphthalate, polyethylene terephthalate and the like; nylons such as nylon-6, nylon-6,6, nylon-4,10 and the like; polyimide; polysulfone; polyphenylene sulfide; silicon resins such as polydiphenyl siloxane and the like; phenol resins such as novolac and the like; epoxy resin; polyurethane; polystyrene, butadiene-styrene copolymer; polysaccharides such as cellulose, acetyl cellulose, nitrocellulose, starch, calcium alginate, hydroxypropyl methyl cellulose and the like; chitin; chitosan; urushi (Japanese lacquer); polyamides such as gelatin, collagen, keratin and the like; and copolymers of these high molecular materials. These may be a composite compound, and metal oxide particles, glass fiber or the like may be added thereto as occasion demands. Further, an organic compound material may be blended therewith.

Since the capability of attenuating radiation energy generally increases as specific gravity increases, the plate-like member of the stimulable phosphor sheet is preferably formed of a compound material or a composite material having specific gravity of 1.0 g/cm³ or more and more preferably formed of a compound material or a composite material having specific gravity of 1.5 g/cm³ to 23 g/cm³.

Since the capability of attenuating light energy generally increases as scattering and/or absorption of light increases, the plate-like member of the stimulable phosphor sheet preferably has absorbance of 0.3 per cm (thickness) or more and more preferably has absorbance of 1 per cm (thickness) or more. The absorbance can be determined by placing an integrating sphere immediately behind a plate-like member having a thickness of T cm, measuring an amount A of transmitted light at a wavelength of probe light or emission light used for measurement by a spectrophotometer, and calculating A/T. In the present invention, a light scattering substance or a light absorbing substance may be added to the plate-like member of the stimulable phosphor sheet in order to improve the capability of attenuating light energy. Particles of a material different from a material forming the plate-like member of the stimulable phosphor sheet may be preferably used as a light scattering substance and a pigment or dye may be preferably used as a light absorbing substance.

In a further preferred aspect of the present invention, the plate-like member of the stimulable phosphor sheet is formed of plastic material in which metal particles are dispersed.

In a preferred aspect of the present invention, the plate-like member is formed with 10 or more through-holes and the stimulable phosphor sheet is formed with 10 or more stimulable phosphor layer regions.

In a further preferred aspect of the present invention, the plate-like member is formed with 50 or more through-holes and the stimulable phosphor sheet is formed with 50 or more stimulable phosphor layer regions.

In a further preferred aspect of the present invention, the plate-like member is formed with 100 or more through-holes and the stimulable phosphor sheet is formed with 100 or more stimulable phosphor layer regions.

In a further preferred aspect of the present invention, the plate-like member is formed with 500 or more through-holes and the stimulable phosphor sheet is formed with 500 or more stimulable phosphor layer regions.

In a further preferred aspect of the present invention, the plate-like member is formed with 1,000 or more through-holes and the stimulable phosphor sheet is formed with 1,000 or more stimulable phosphor layer regions.

In a further preferred aspect of the present invention, the plate-like member is formed with 5,000 or more through-holes and the stimulable phosphor sheet is formed with 5,000 or more stimulable phosphor layer regions.

In a further preferred aspect of the present invention, the plate-like member is formed with 10,000 or more through-holes and the stimulable phosphor sheet is formed with 10,000 or more stimulable phosphor layer regions.

In a further preferred aspect of the present invention, the plate-like member is formed with 50,000 or more through-holes and the stimulable phosphor sheet is formed with 50,000 or more stimulable phosphor layer regions.

In a further preferred aspect of the present invention, the plate-like member is formed with 100,000 or more through-holes and the stimulable phosphor sheet is formed with 100,000 or more stimulable phosphor layer regions.

In a preferred aspect of the present invention, each of the plurality of through-holes is formed in the plate-like member to have a size of less than 5 mm² and each of the plurality of stimulable phosphor layer regions is formed in the stimulable phosphor sheet to have a size of less than 5 mm².

In a further preferred aspect of the present invention, each of the plurality of through-holes is formed in the plate-like member to have a size of less than 1 mm² and each of the plurality of stimulable phosphor layer regions is formed in the stimulable phosphor sheet to have a size of less than 1 mm².

In a further preferred aspect of the present invention, each of the plurality of through-holes is formed in the plate-like member to have a size of less than 0.5 mm² and each of the plurality of stimulable phosphor layer regions is formed in the stimulable phosphor sheet to have a size of less than 0.5 mm².

In a further preferred aspect of the present invention, each of the plurality of through-holes is formed in the plate-like member to have a size of less than 0.1 mm² and each of the plurality of stimulable phosphor layer regions is formed in the stimulable phosphor sheet to have a size of less than 0.1 mm².

In a further preferred aspect of the present invention, each of the plurality of through-holes is formed in the plate-like member to have a size of less than 0.05 mm² and each of the plurality of stimulable phosphor layer regions is formed in the stimulable phosphor sheet to have a size of less than 0.05 mm².

In a further preferred aspect of the present invention, each of the plurality of through-holes is formed in the plate-like member to have a size of less than 0.01 mm² and each of the plurality of stimulable phosphor layer regions is formed in the stimulable phosphor sheet to have a size of less than 0.01 mm².

In the present invention, the density of the stimulable phosphor layer regions formed in the stimulable phosphor sheet can be determined based upon the material of the plate-like member, the kind of electron beam released from the radioactive labeling substance and the like.

In a preferred aspect of the present invention, the plurality of through-holes are formed in the plate-like member at a density of 10 or more per cm² and the plurality of stimulable phosphor layer regions are formed in the stimulable phosphor sheet at a density of 10 or more per cm².

In a further preferred aspect of the present invention, the plurality of through-holes are formed in the plate-like member at a density of 50 or more per cm² and the plurality of stimulable phosphor layer regions are formed in the stimulable phosphor sheet at a density of 50 or more per cm².

In a further preferred aspect of the present invention, the plurality of through-holes are formed in the plate-like member at a density of 100 or more per cm² and the plurality of stimulable phosphor layer regions are formed in the stimulable phosphor sheet at a density of 100 or more per cm².

In a further preferred aspect of the present invention, the plurality of through-holes are formed in the plate-like member at a density of 500 or more per cm² and the plurality of stimulable phosphor layer regions are formed in the stimulable phosphor sheet at a density of 500 or more per cm².

In a further preferred aspect of the present invention, the plurality of through-holes are formed in the plate-like member at a density of 1,000 or more per cm² and the plurality of stimulable phosphor layer regions are formed in the stimulable phosphor sheet at a density of 1,000 or more per cm².

In a further preferred aspect of the present invention, the plurality of through-holes are formed in the plate-like member at a density of 5,000 or more per cm² and the plurality of stimulable phosphor layer regions are formed in the stimulable phosphor sheet at a density of 5,000 or more per cm².

In a further preferred aspect of the present invention, the plurality of through-holes are formed in the plate-like member at a density of 10,000 or more per cm² and the plurality of stimulable phosphor layer regions are formed in the stimulable phosphor sheet at a density of 10,000 or more per cm².

In a further preferred aspect of the present invention, the plurality of through-holes are formed in the plate-like member at a density of 50,000 or more per cm² and the plurality of stimulable phosphor layer regions are formed in the stimulable phosphor sheet at a density of 50,000 or more per cm².

In a further preferred aspect of the present invention, the plurality of through-holes are formed in the plate-like member at a density of 100,000 or more per cm² and the plurality of stimulable phosphor layer regions are formed in the stimulable phosphor sheet at a density of 100,000 or more per cm².

In a preferred aspect of the present invention, the plurality of through-holes are regularly formed in the plate-like member and the plurality of stimulable phosphor layer regions are regularly formed in the stimulable phosphor sheet.

In the present invention, the stimulable phosphor usable for storing radiation energy may be of any type insofar as it can store radiation energy or electron beam energy and can be stimulated by an electromagnetic wave to release the radiation energy or the electron beam energy stored therein in the form of light. More specifically, preferably employed stimulable phosphors include alkaline earth metal fluorohalide phosphors (Ba₁₋ₓ, M²⁺ₓ)FX:yA (where M²⁺ is at least one alkaline earth metal selected from the group consisting of Mg, Ca, Sr, Zn and Cd; X is at least one element selected from the group consisting of Cl, Br and I, A is at least one element selected from the group consisting of Eu, Tb, Ce, Tm, Dy, Pr, Ho, Nd, Yb and Er; x is equal to or greater than 0 and equal to or less than 0.6 and y is equal to or greater than 0 and equal to or less than 0.2) disclosed in U.S. Patent No. 4,239,968, alkaline earth metal fluorohalide phosphors SrFX:Z (where X is at least one halogen selected from the group consisting of Cl, Br and I; Z is at least one of Eu and Ce) disclosed in Japanese Patent Application Laid Open No. 2-276997, europium activated complex halide phosphors BaFXxNaX':aEu²⁺ (where each of X or X' is at least one halogen selected from the group consisting of Cl, Br and I; x is greater than 0 and equal to or less than 2; and y is greater than 0 and equal to or less than 0.2) disclosed in Japanese Patent Application Laid Open No. 59-56479, cerium activated trivalent metal oxyhalide phosphors MOX:xCe (where M is at least one trivalent metal selected from the group consisting of Pr, Nd, Pm, Sm, Eu, Tb, Dy, Ho, Er, Tm, Yb and Bi; X is at least one halogen selected from the group consisting of Br and I; and x is greater than 0 and less than 0.1) disclosed in Japanese Patent Application laid Open No. 58-69281, cerium activated rare earth oxyhalide phosphors LnOX:xCe (where Ln is at least one rare earth element selected from the group consisting of Y, La, Gd and Lu; X is at least one halogen selected from the group consisting of Cl, Br and I; and x is greater than 0 and equal to or less than 0.1) disclosed in U.S. Patent No. 4,539,137, and europium activated complex halide phosphors M^{II}FXaM^{I}X'bM'^{II}X''₂cM^{III}X'''₃xA:yEu²⁺ (where M^{II} is at least one alkaline earth metal selected from the group consisting of Ba, Sr and Ca; M^{I} is at least one alkaline metal selected from the group consisting of Li, Na, K, Rb and Cs; M'^{II} is at least one divalent metal selected from the group consisting of Be and Mg; M^{III} is at least one trivalent metal selected from the group consisting of Al, Ga, In and Ti; A is at least one metal oxide; X is at least one halogen selected from the group consisting of Cl, Br and I; each of X', X" and X"' is at least one halogen selected from the group consisting of F, Cl, Br and I; a is equal to or greater than 0 and equal to or less than 2; b is equal to or greater than 0 and equal to or less than 10⁻²; c is equal to or greater than 0 and equal to or less than 10⁻²; a+b+c is equal to or greater than 10⁻²; x is greater than 0 and equal to or less than 0.5; and y is greater than 0 and equal to or less than 0.2) disclosed in U.S. Patent No. 4,962,047.

In the present invention, the stimulable phosphor usable for storing the energy of chemiluminescence emission may be of any type insofar as it can store the energy of light in the wavelength band of visible light and can be stimulated by an electromagnetic wave to release in the form of light the energy of light in the wavelength band of visible light stored therein. More specifically, preferably employed stimulable phosphors include at least one selected from the group consisting of metal halophosphates, rare-earth-activated sulfide-host phosphors, aluminate-host phosphors, silicate-host phosphors, fluoride-host phosphors and mixtures of two, three or more of these phosphors. Among them, rare-earth-activated sulfide-host phosphors are more preferable and, particularly, rare-earth-activated alkaline earth metal sulfide-host phosphors disclosed in U.S. Patent Nos. 5,029,253 and 4,983,834, zinc germanate such as Zn₂GeO₄:Mn, V; Zn₂GeO₄:Mn disclosed in Japanese Patent Application Laid Open No. 2001-131545, alkaline-earth aluminate such as Sr₄Al₁₄O₂₅:Ln (wherein Ln is a rare-earth element) disclosed in Japanese Patent Application Laid Open No. 2001-123162, Y_{0.8}Lu_{1.2}SiO₅:Ce, Zr; GdOCl:Ce disclosed in Japanese Patent Publication No. 6-31904 and the like are most preferable.

In the present invention, the stimulable phosphor membrane contains stimulable phosphor and a binder. In the present invention, thermostatic resin having elasticity at a normal temperature and exhibiting fluidity when being heated is preferably used as a binder. Illustrative examples of a binder preferably usable in the present invention include polyurethane, polystyrene system elastomer, polyolefin system copolymer, polyester, polyamide, polybutadiene, ethylene vinyl acetate, vinyl chloride system copolymer, natural rubber, fluoro rubber, polyisoprene, chloropolyethylene, butadiene system copolymer, silicone rubber and the like.

The above and other objects and features of the present invention will become apparent from the following description made with reference to the accompanying drawings.

### BRIEF DESCRIPTION OF THE DRAWINGS

Figure 1 is a schematic front view showing a biochemical analysis unit.
Figure 2 is a schematic front view showing a spotting device.
Figure 3 is a schematic longitudinal cross sectional view showing a hybridization reaction vessel.
Figure 4 is a schematic perspective view showing a stimulable phosphor sheet which is a preferred embodiment of the present invention.
Figure 5 is a schematic partial cross-sectional view showing a stimulable phosphor sheet which is a preferred embodiment of the present invention.
Figure 6 is a schematic cross sectional view showing a calender processing apparatus.
Figure 7 is a schematic cross-sectional view showing a method for exposing a number of the stimulable phosphor layer regions formed in the stimulable phosphor sheet to a radioactive labeling substance contained in a number of the absorptive regions formed in the substrate of the biochemical analysis unit.
Figure 8 is a schematic view showing one example of a scanner for reading radiation data of a radioactive labeling substance recorded in a number of the stimulable phosphor layer regions formed in the stimulable phosphor sheet and fluorescence data of a fluorescent substance such as a fluorescent dye recorded in a number of the absorptive regions formed in the biochemical analysis unit and producing biochemical analysis data.
Figure 9 is a schematic perspective view showing details in the vicinity of a photomultiplier of a scanner shown in Figure 8.
Figure 10 is a schematic cross-sectional view taken along a line A-A in Figure 9.
Figure 11 is a schematic cross-sectional view taken along a line B-B in Figure 9.
Figure 12 is a schematic cross-sectional view taken along a line C-C in Figure 9.
Figure 13 is a schematic cross-sectional view taken along a line D-D in Figure 9.
Figure 14 is a schematic plan view showing the scanning mechanism of the optical head.
Figure 15 is a block diagram of a control system, an input system, a drive system and a detection system of the scanner shown in Figure 8.
Figure 16 is a schematic perspective view showing another stimulable phosphor sheet which is a preferred embodiment of the present invention.
Figure 17 is a schematic perspective view showing a scanner for reading chemiluminescence data recorded in a number of stimulable phosphor layer regions formed in a stimulable phosphor sheet and producing biochemical analysis data.
Figure 18 is a schematic perspective view showing details in the vicinity of a photomultiplier of a scanner shown in Figure 17.
Figure 19 is a schematic cross-sectional view taken along a line E-E in Figure 18.
Figure 20 is a schematic perspective view showing another example of a biochemical analysis unit.
Figure 21 is a schematic partial cross sectional view showing the biochemical analysis unit shown in Figure 20.
Figure 22 is a schematic perspective view showing a stimulable phosphor sheet which is a further preferred aspect of the present invention.
Figure 23 is a schematic partial cross sectional view showing a stimulable phosphor sheet which is a further preferred aspect of the present invention.
Figure 24 is a schematic cross sectional view showing a heat press apparatus.
Figure 25 is a schematic cross-sectional view showing a method for exposing a number of the stimulable phosphor layer regions formed in the stimulable phosphor sheet to a radioactive labeling substance selectively contained in a number of the absorptive layers formed in the biochemical analysis unit.
Figure 26 is a schematic perspective view showing another stimulable phosphor sheet which is a further preferred embodiment of the present invention.
Figure 27 is a schematic partial cross sectional view showing another stimulable phosphor sheet which is a further preferred embodiment of the present invention.

### DESCRIPTION OF THE PREFERRED EMBODIMENTS

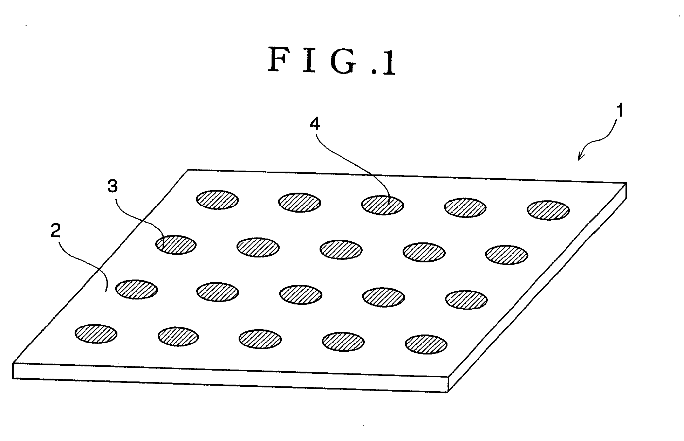

Figure 1 is a schematic front view showing a biochemical analysis unit.

As shown in Figure 1, a biochemical analysis unit 1 includes a substrate 2 formed of stainless steel and formed with a number of substantially circular through-holes 3 at a high density, and a number of absorptive regions 4 are dot-like formed by charging nylon-6 in the through-holes 3.

Although not accurately shown in Figure 1, in this embodiment, the through-holes 3 are formed in the substrate 2 so that substantially circular absorptive regions 4 having a size of about 0.07 mm² are regularly formed in the manner of a matrix of 120 columns x 160 lines and, therefore, 19,200 absorptive regions 4 are formed.

A number of absorptive regions 4 are formed by charging absorptive material 4 in the through-holes 3 formed in the substrate in such a manner that the surfaces of the absorptive regions 4 coincide with that of the substrate.

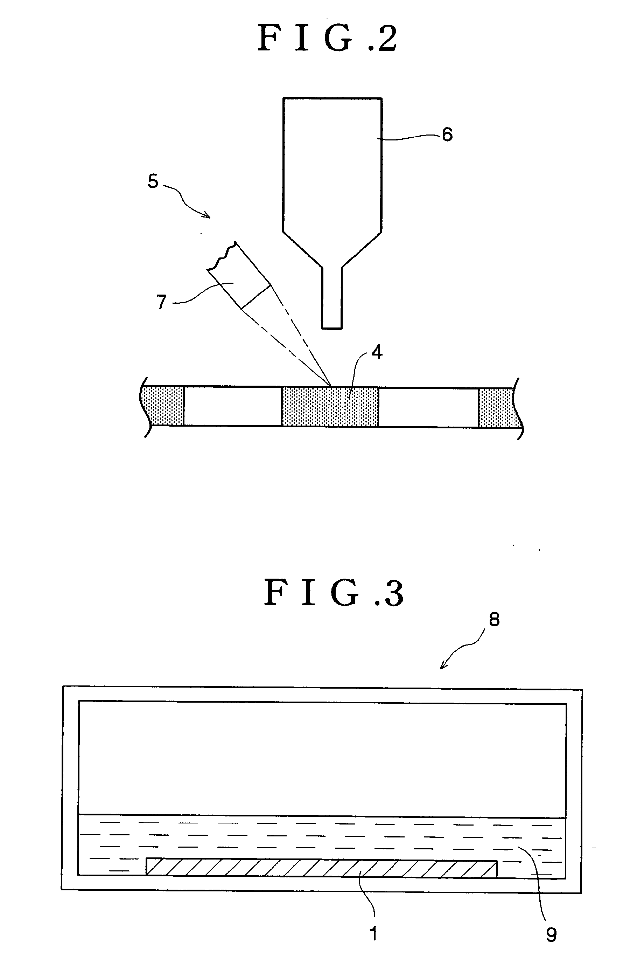

Figure 2 is a schematic front view showing a spotting device.

As shown in Figure 2, when biochemical analysis is performed, a solution containing specific binding substances such as a plurality of cDNAs whose sequences are known but differ from each other are spotted using a spotting device 5 onto a number of the absorptive regions 4 of the biochemical analysis unit 1 and the specific binding substances are fixed therein.

As shown in Figure 2, the spotting device 5 includes an injector 6 for ejecting a solution of specific binding substances toward the biochemical analysis unit 1 and a CCD camera 7 and is constituted so that the solution of specific binding substances such as cDNAs are spotted from the injector 6 when the tip end portion of the injector 6 and the center of the absorptive region 4 into which the solution containing specific binding substances is to be spotted are determined to coincide with each other as a result of viewing them using the CCD camera, thereby ensuring that the solution of specific binding substances can be accurately spotted into a number of the absorptive regions 4 of the biochemical analysis unit 1.

Figure 3 is a schematic longitudinal cross sectional view showing a hybridization reaction vessel.

As shown in Figure 3, a hybridization reaction vessel 8 is formed to have a substantially rectangular cross section and accommodates a hybridization reaction solution 9 containing a substance derived from a living organism labeled with a labeling substance as a probe therein.

In the case where a specific binding substance such as cDNA is to be labeled with a radioactive labeling substance, a hybridization reaction solution 9 containing a substance derived from a living organism and labeled with a radioactive labeling substance as a probe is prepared and is accommodated in the hybridization reaction vessel 8.

On the other hand, in the case where a specific binding substance such as cDNA is to be labeled with a labeling substance which generates chemiluminescence emission when it contacts a chemiluminescent substrate, a hybridization reaction solution 9 containing a substance derived from a living organism and labeled with a labeling substance which generates chemiluminescence emission when it contacts a chemiluminescent substrate as a probe is prepared and is accommodated in the hybridization reaction vessel 8.

Further, in the case where a specific binding substance such as cDNA is to be labeled with a fluorescent substance such as a fluorescent dye, a hybridization reaction solution 9 containing a substance derived from a living organism and labeled with a fluorescent substance such as a fluorescent dye as a probe is prepared and is accommodated in the hybridization reaction vessel 8.

It is possible to prepare a hybridization reaction solution 9 containing two or more substances derived from a living organism among a substance derived from a living organism and labeled with a radioactive labeling substance, a substance derived from a living organism and labeled with a labeling substance which generates chemiluminescence emission when it contacts a chemiluminescent substrate and a substance derived from a living organism and labeled with a fluorescent substance such as a fluorescent dye and accommodate it in the hybridization vessel 8. In this embodiment, a hybridization reaction solution 9 containing a substance derived from a living organism and labeled with a radioactive labeling substance, a substance derived from a living organism and labeled with a labeling substance which generates chemiluminescence emission when it contacts a chemiluminescent substrate and a substance derived from a living organism and labeled with a fluorescent substance such as a fluorescent dye is prepared and accommodated in the hybridization reaction vessel 8.

When hybridization is to be performed, the biochemical analysis unit 1 containing specific binding substances such as a plurality of cDNAs spotted into a number of absorptive regions 4 is accommodated in the hybridization reaction vessel 8.

As a result, specific binding substances spotted in a number of the absorptive regions 4 of the biochemical analysis unit 1 can be selectively hybridized with a substance derived from a living organism, labeled with a radioactive labeling substance and contained in the hybridization reaction solution 9, a substance derived from a living organism, labeled with a labeling substance which generates chemiluminescence emission when it contacts a chemiluminescent substrate and contained in the hybridization reaction solution 9 and a substance derived from a living organism, labeled with a fluorescent substance such as a fluorescent dye and contained in the hybridization reaction solution 9.

In this manner, radiation data of a radioactive labeling substance, chemiluminescence data of a labeling substance which generates chemiluminescence emission when it contacts a chemiluminescent substrate and fluorescence data of a fluorescent substance such as a fluorescent dye are recorded in a number of absorptive regions 4 formed in the biochemical analysis unit 1.

Fluorescence data recorded in a number of absorptive regions 4 formed in the biochemical analysis unit 1 are read by a scanner described later, thereby producing biochemical analysis data.

On the other hand, radiation data of the radioactive labeling substance recorded in a number of absorptive regions 4 formed in the biochemical analysis unit 1 are transferred onto a stimulable phosphor sheet and read by the scanner described later, thereby producing biochemical analysis data.

Further, chemiluminescence data recorded in a number of absorptive regions 4 formed in the biochemical analysis unit 1 are transferred onto a stimulable phosphor sheet and read by the scanner described later, thereby producing biochemical analysis data.

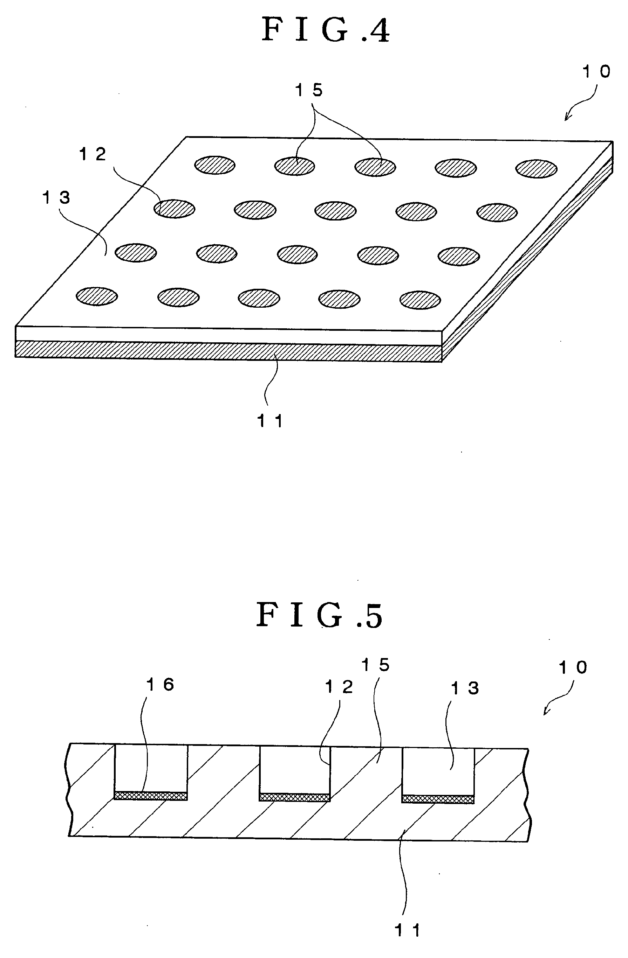

Figure 4 is a schematic perspective view showing a stimulable phosphor sheet which is a preferred embodiment of the present invention and Figure 5 is a schematic partial cross-sectional view thereof.

As shown in Figures 4 and 5, a stimulable phosphor sheet 10 according to this embodiment includes a stimulable phosphor membrane 11 containing BaFX system stimulable phosphor (where X is at least one halogen atom selected from the group consisting of Cl, Br and I) capable of absorbing and storing radiation energy and a binder and a nickel substrate 13 regularly formed with a number of through-holes 12 and the stimulable phosphor membrane 11 is pressed into a number of the through-holes 12 formed in the nickel substrate 13 using a calender processing apparatus, thereby dot-like forming a number of stimulable phosphor layer regions 15 at positions corresponding to those of a number of the through-holes 12 of the nickel substrate 13.

The surface of the nickel substrate 13 is coated with an adhesive agent 16 and the stimulable phosphor membrane 11 is pressed into a number of the through-holes 12 of the nickel substrate 13 sandwiching the adhesive agent 16, whereby the stimulable phosphor membrane 11 is firmly bonded to the nickel substrate 13 to improve the durability of the stimulable phosphor sheet 10.

A number of the through-holes 12 are formed in the nickel substrate 13 in the same pattern as that of a number of the absorptive regions 4 formed in the biochemical analysis unit 1 and each of a number of the through-holes 12 has the same size as that of each of a number of the absorptive regions 4 formed in the biochemical analysis unit 1.

Therefore, although not accurately shown in Figure 4, in this embodiment, substantially circular stimulable phosphor layer regions 15 having a size of about 0.07 mm² are regularly formed in the manner of a matrix of 120 columns x 160 lines in the nickel substrate 13 and, therefore, 19,200 stimulable phosphor layer regions 15 are dot-like formed.

As shown in Figure 5, the stimulable phosphor sheet 10 is formed by pressing the stimulable phosphor membrane 11 into a number of the through-holes 12 of the nickel substrate 13 in such a manner that the surface of the nickel substrate 13 and the surfaces of the stimulable phosphor layer regions 15 lie at the same height level.

The stimulable phosphor sheet 10 is prepared in the following manner, for example.

The surface of a film base coated with a mold releasing agent is coated with a solution prepared by mixing stimulable phosphor, a binder and a solvent and after drying, the film base is peeled off, thereby forming a stimulable phosphor membrane 11 having self-supportability.

An adhesive agent 16 is then coated on the surface of a nickel substrate 13 formed with a number of through-holes 12 in the same pattern as that of a number of the absorptive regions 4 formed in the substrate 2 of the biochemical analysis unit 1 and the thus obtained stimulable phosphor membrane 11 is superposed on the layer of the adhesive agent 16 to produce a laminate. Then, the laminate is pressed by a calender processing apparatus.

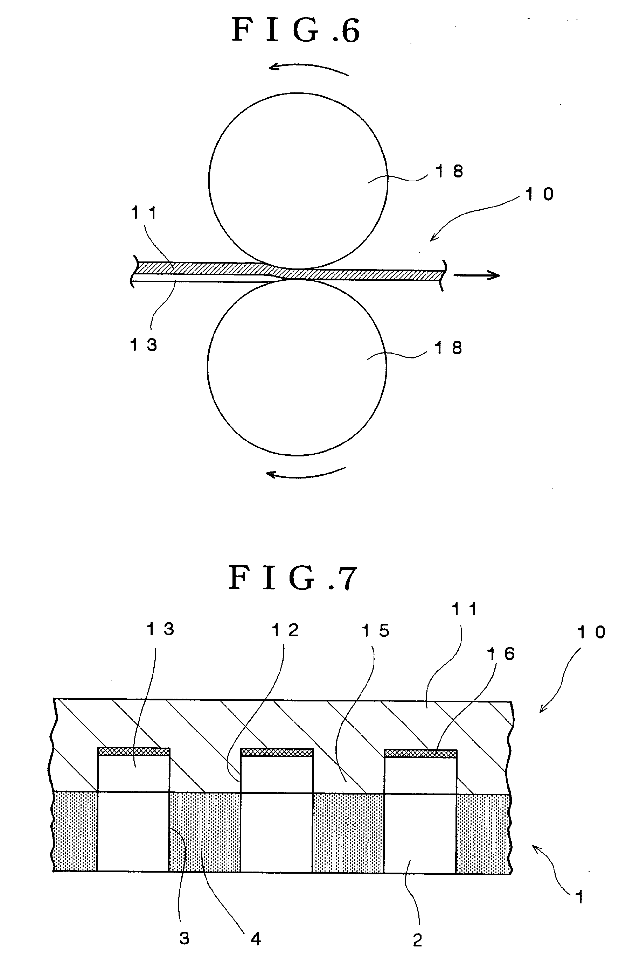

Figure 6 is a schematic cross sectional view showing a calender processing apparatus.

As shown in Figure 6, a calender processing apparatus includes a pair of temperature-controlled calender rolls 18 and when the laminate prepared by superposing the stimulable phosphor membrane 11 on the surface of the nickel substrate 13 formed with a number of the through-holes 12 is fed to a portion between the pair of calender rolls 18, the stimulable phosphor membrane 11 is pressed into a number of the through-holes 12 formed in the nickel substrate 13, thereby producing a stimulable phosphor sheet 10 dot-like formed with a number of stimulable phosphor layer regions 15 corresponding to a number of the through-holes 12 regularly formed in the nickel substrate 13 in the same pattern as that of the absorptive regions 4 formed in the biochemical analysis unit 1.

Figure 7 is a schematic cross-sectional view showing a method for exposing a number of the stimulable phosphor layer regions 15 formed in the stimulable phosphor sheet 10 to a radioactive labeling substance contained in a number of the absorptive regions 4 formed in the substrate 2 of the biochemical analysis unit 1.

As shown in Figure 7, when the stimulable phosphor layer regions 15 of a stimulable phosphor sheet 10 are to be exposed, the stimulable phosphor sheet 10 is superposed on the biochemical analysis unit 1 in such a manner that a number of the absorptive regions 4 formed in the biochemical analysis unit 1 face the corresponding stimulable phosphor layer regions 15 formed in the stimulable phosphor sheet 10.

In this embodiment, since the biochemical analysis unit 1 is formed by charging nylon-6 in a number of the through-holes 3 formed in the substrate 2 made of stainless steel, the biochemical analysis unit 1 does not shrink or stretch when it is subjected to liquid processing such as hybridization and, therefore, it is possible to easily and accurately superpose the stimulable phosphor sheet 10 on the biochemical analysis unit 1 so that each of the stimulable phosphor layer regions 15 formed in the stimulable phosphor sheet 10 accurately faces the corresponding absorptive region 4 formed in the substrate 2 of the biochemical analysis unit 1, thereby exposing the stimulable phosphor layer regions 15.

In this manner, each of the stimulable phosphor layer regions 15 formed in the stimulable phosphor sheet 10 is kept to face the corresponding absorptive region 4 formed in the substrate 2 of the biochemical analysis unit 1 for a predetermined time period, whereby a number of the stimulable phosphor layer regions 15 formed in the stimulable phosphor sheet 10 are exposed to the radioactive labeling substance selectively contained in a number of the absorptive regions 4 formed in the substrate 2 of the biochemical analysis unit 1.

During the exposure operation, electron beams (β rays) are released from the radioactive labeling substance contained in the absorptive regions 4 of the biochemical analysis unit 1. However, since a number of the absorptive regions 4 of the biochemical analysis unit 1 are formed spaced apart from each other in the substrate 2 made of stainless steel and the substrate 2 made of stainless steel capable of attenuating radiation energy is present around each of the absorptive regions 4, electron beams (β rays) released from the radioactive labeling substance contained in the absorptive regions 4 of the biochemical analysis unit 1 can be efficiently prevented from scattering in the substrate 2 of the biochemical analysis unit 1. Further, since a number of the stimulable phosphor layer regions 15 of the stimulable phosphor sheet 10 are formed by pressing the stimulable phosphor membrane 11 into a number of the through-holes 12 formed in the nickel substrate 13 and the nickel substrate 13 capable of attenuating radiation energy is present around each of the stimulable phosphor layer regions 15, electron beams (β rays) released from the radioactive labeling substance contained in the absorptive regions 4 of the biochemical analysis unit 1 can be efficiently prevented from scattering in the nickel substrate 13 of the stimulable phosphor sheet 10. Therefore, it is possible to selectively expose only the stimulable phosphor layer region 15 each of the absorptive regions 4 faces to the electron beams (β rays) released from the radioactive labeling substance contained in each of the absorptive regions 4.

In this manner, radiation data of a radioactive labeling substance are recorded in a number of the stimulable phosphor layer regions 15 formed in the stimulable phosphor sheet 10.

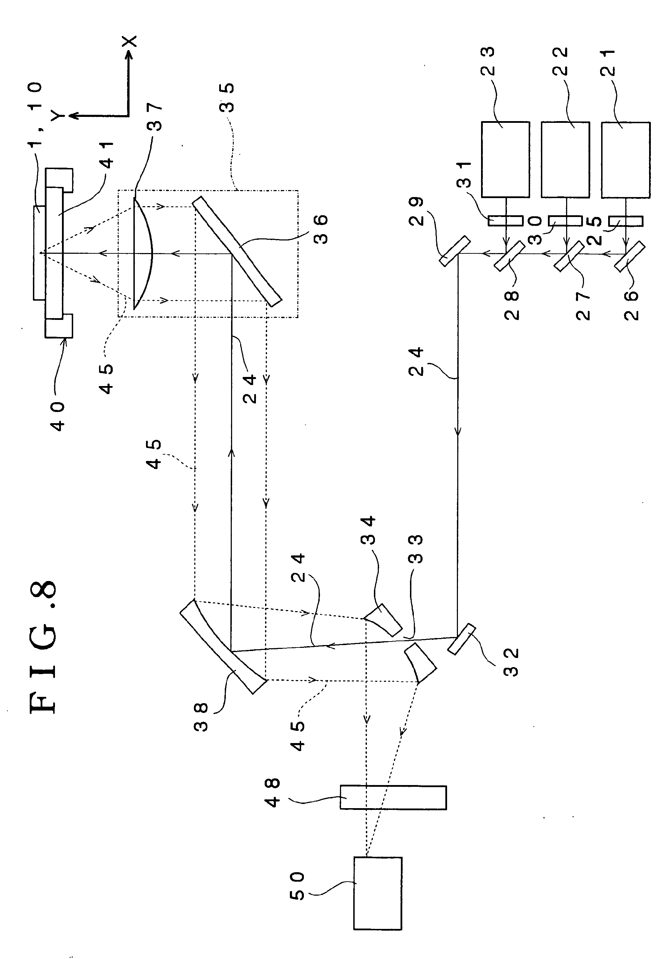

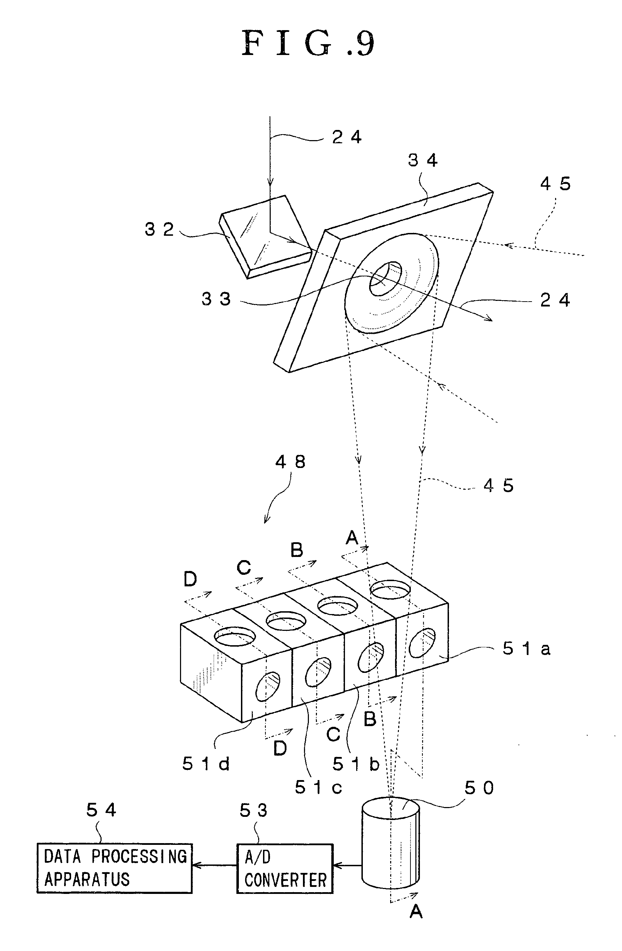

Figure 8 is a schematic view showing one example of a scanner for reading radiation data of a radioactive labeling substance recorded in a number of the stimulable phosphor layer regions 15 formed in the stimulable phosphor sheet 10 and fluorescence data of a fluorescent substance such as a fluorescent dye recorded in a number of the absorptive regions 4 formed in the biochemical analysis unit 1 and producing biochemical analysis data, and Figure 9 is a schematic perspective view showing details in the vicinity of a photomultiplier of the scanner.

The scanner shown in Figure 8 is constituted so as to read radiation data of a radioactive labeling substance recorded in a number of the stimulable phosphor layer regions 15 formed in the stimulable phosphor sheet 10 and fluorescence data of a fluorescent substance such as a fluorescent dye recorded in a number of the absorptive regions 4 formed in the substrate 2 of the biochemical analysis unit 1 to produce biochemical analysis data and includes a first laser stimulating ray source 21 for emitting a laser beam having a wavelength of 640 nm, a second laser stimulating ray source 22 for emitting a laser beam having a wavelength of 532 nm and a third laser stimulating ray source 23 for emitting a laser beam having a wavelength of 473 nm.

In this embodiment, the first laser stimulating ray source 21 is constituted by a semiconductor laser beam source and the second laser stimulating ray source 22 and the third laser stimulating ray source 23 are constituted by a second harmonic generation element.

A laser beam 24 emitted from the first laser stimulating source 21 passes through a collimator lens 25, thereby being made a parallel beam, and is reflected by a mirror 26. A first dichroic mirror 27 for transmitting light having a wavelength of 640 nm but reflecting light having a wavelength of 532 nm and a second dichroic mirror 28 for transmitting light having a wavelength equal to and longer than 532 nm but reflecting light having a wavelength of 473 nm are provided in the optical path of the laser beam 24 emitted from the first laser stimulating ray source 21. The laser beam 24 emitted from the first laser stimulating ray source 21 and reflected by the mirror 26 passes through the first dichroic mirror 27 and the second dichroic mirror 28 and advances to a mirror 29.

On the other hand, the laser beam 24 emitted from the second laser stimulating ray source 22 passes through a collimator lens 30, thereby being made a parallel beam, and is reflected by the first dichroic mirror 27, thereby changing its direction by 90 degrees. The laser beam 24 then passes through the second dichroic mirror 28 and advances to the mirror 29.

Further, the laser beam 24 emitted from the third laser stimulating ray source 23 passes through a collimator lens 31, thereby being made a parallel beam, and is reflected by the second dichroic mirror 28, thereby changing its direction by 90 degrees. The laser beam 24 then advances to the mirror 29.

The laser beam 24 advancing to the mirror 29 is reflected by the mirror 29 and advances to a mirror 32 to be reflected thereby.

A perforated mirror 34 formed with a hole 33 at the center portion thereof is provided in the optical path of the laser beam 24 reflected by the mirror 32. The laser beam 24 reflected by the mirror 32 passes through the hole 33 of the perforated mirror 34 and advances to a concave mirror 38.

The laser beam 24 advancing to the concave mirror 38 is reflected by the concave mirror 38 and enters an optical head 35.

The optical head 35 includes a mirror 36 and an aspherical lens 37. The laser beam 24 entering the optical head 35 is reflected by the mirror 36 and condensed by the aspherical lens 37 onto the stimulable phosphor sheet 10 or the biochemical analysis unit 1 placed on the glass plate 41 of a stage 40.

When the laser beam 24 impinges on the stimulable phosphor layer region 15 formed in the stimulable phosphor sheet 10, stimulable phosphor contained in the stimulable phosphor layer region 15 formed in the stimulable phosphor 10 is excited, thereby releasing stimulated emission 45. On the other hand, when the laser beam 24 impinges on the absorptive region 4 formed in the biochemical analysis unit 1, a fluorescent dye or the like contained in the absorptive region 4 formed in the biochemical analysis unit 1 is excited, thereby releasing fluorescence emission 45.

The stimulated emission 45 released from the stimulable phosphor layer region 15 formed in the stimulable phosphor 10 or the fluorescence emission 45 released from the absorptive region 4 formed in the biochemical analysis unit 1 is condensed onto the mirror 36 by the aspherical lens 37 provided in the optical head 35 and reflected by the mirror 36 on the side of the optical path of the laser beam 24, thereby being made a parallel beam to advance to the concave mirror 38.

The stimulated emission 45 or the fluorescence emission 45 advancing to the concave mirror 38 is reflected by the concave mirror 38 and advances to the perforated mirror 34.

As shown in Figure 9, the stimulated emission 45 or the fluorescence emission 45 advancing to the perforated mirror 34 is reflected downward by the perforated mirror 34 formed as a concave mirror and advances to a filter unit 48, whereby light having a predetermined wavelength is cut. The stimulated emission 45 or the fluorescence emission 45 then impinges on a photomultiplier 50, thereby being photoelectrically detected.

As shown in Figure 9, the filter unit 48 is provided with four filter members 51a, 51b, 51c and 51d and is constituted to be laterally movable in Figure 9 by a motor (not shown).

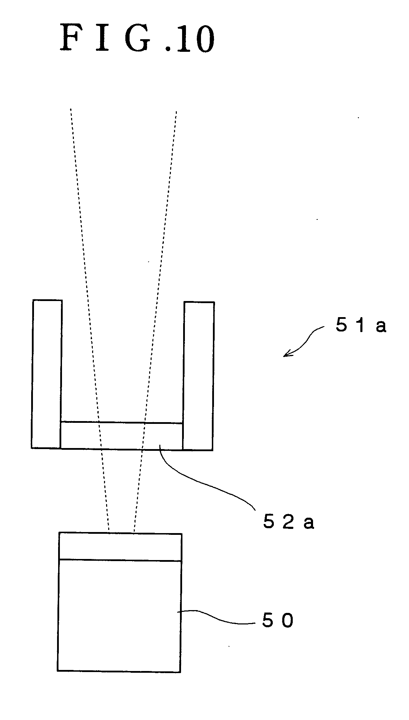

Figure 10 is a schematic cross-sectional view taken along a line A-A in Figure 9.

As shown in Figure 10, the filter member 51a includes a filter 52a and the filter 52a is used for reading fluorescence emission 45 by stimulating a fluorescent substance such as a fluorescent dye contained in a number of the absorptive regions 4 formed in the substrate 2 of the biochemical analysis unit 1 using the first laser stimulating ray source 21 and has a property of cutting off light having a wavelength of 640 nm but transmitting light having a wavelength longer than 640 nm.

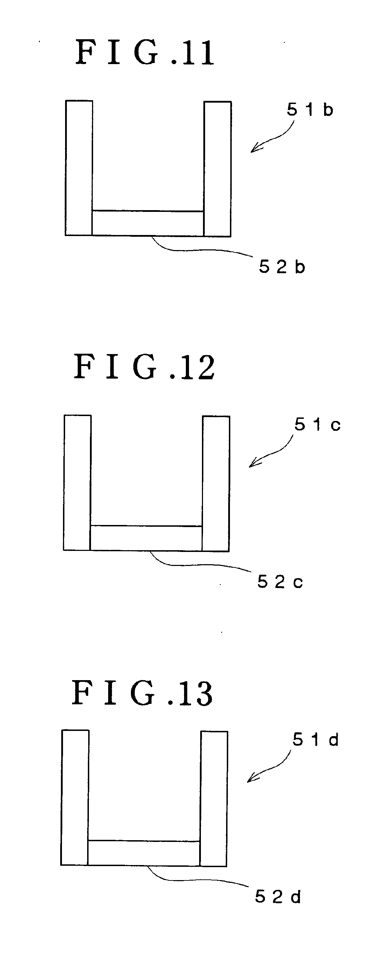

Figure 11 is a schematic cross-sectional view taken along a line B-B in Figure 9.

As shown in Figure 11, the filter member 51b includes a filter 52b and the filter 52b is used for reading fluorescence emission 45 by stimulating a fluorescent substance such as a fluorescent dye contained in a number of the absorptive regions 4 formed in the substrate 2 of the biochemical analysis unit 1 using the second laser stimulating ray source 22 and has a property of cutting off light having a wavelength of 532 nm but transmitting light having a wavelength longer than 532 nm.

Figure 12 is a schematic cross-sectional view taken along a line C-C in Figure 9.

As shown in Figure 12, the filter member 51c includes a filter 52c and the filter 52c is used for reading fluorescence emission 45 by stimulating a fluorescent substance such as a fluorescent dye contained in in a number of the absorptive regions 4 formed in the substrate 2 of the biochemical analysis unit 1 using the third laser stimulating ray source 23 and has a property of cutting off light having a wavelength of 473 nm but transmitting light having a wavelength longer than 473 nm.

Figure 13 is a schematic cross-sectional view taken along a line D-D in Figure 9.

As shown in Figure 13, the filter member 51d includes a filter 52d and the filter 52d is used for reading stimulated emission released from stimulable phosphor contained in the stimulable phosphor layer 15 formed in the the stimulable phosphor sheet 10 upon being stimulated using the first laser stimulating ray source 1 and has a property of transmitting only light having a wavelength corresponding to that of stimulated emission emitted from stimulable phosphor and cutting off light having a wavelength of 640 nm.

Therefore, in accordance with the kind of a stimulating ray source to be used, one of these filter members 51a, 51b, 51c, 51d is selectively positioned in front of the photomultiplier 50, thereby enabling the photomultiplier 50 to photoelectrically detect only light to be detected.

The analog data produced by photoelectrically detecting light with the photomultiplier 50 are converted by an A/D converter 53 into digital data and the digital data are fed to a data processing apparatus 54.

Although not shown in Figure 8, the optical head 35 is constituted to be movable by a scanning mechanism in a main scanning direction indicated by an arrow X and a sub-scanning direction indicated by an arrow Y in Figure 8 so that all of the stimulable phosphor layer regions 15 formed in the stimulable phosphor sheet 10 or all of the absorptive regions 4 formed in the substrate 2 of the biochemical analysis unit 1 can be scanned by the laser beam 24.

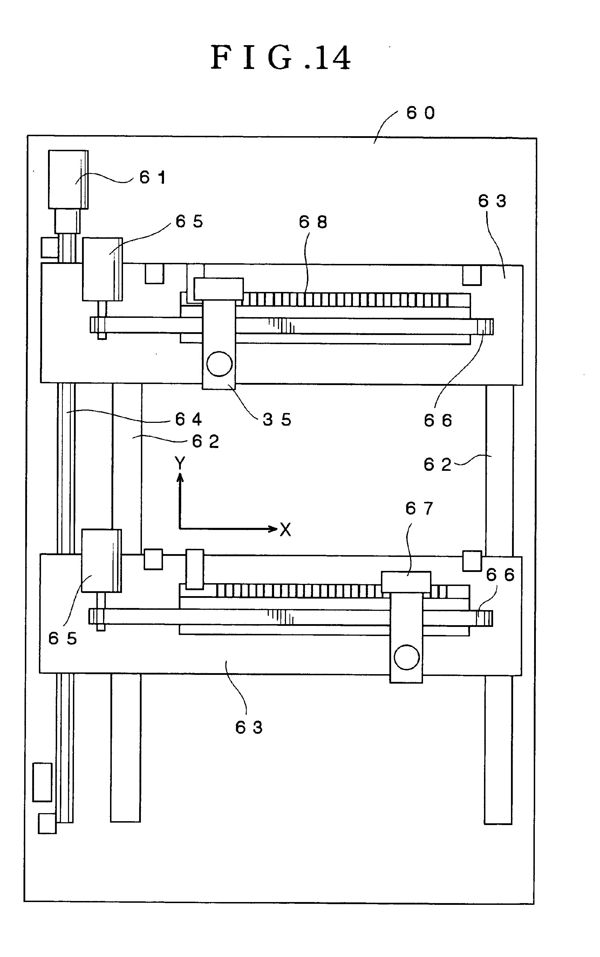

Figure 14 is a schematic plan view showing the scanning mechanism of the optical head 35.

In Figure 14, optical systems other than the optical head 35 and the paths of the laser beam 24 and stimulated emission 45 or fluorescence emission 45 are omitted for simplification.

As shown in Figure 14, the scanning mechanism of the optical head 35 includes a base plate 60, and a sub-scanning pulse motor 61 and a pair of rails 62, 62 are fixed on the base plate 60. A movable base plate 63 is further provided so as to be movable in the sub-scanning direction indicated by an arrow Y in Figure 14.

The movable base plate 63 is formed with a threaded hole (not shown) and a threaded rod 64 rotated by the sub-scanning pulse motor 61 is engaged with the inside of the hole.

A main scanning stepping motor 65 is provided on the movable base plate 63. The main scanning stepping motor 65 is adapted for intermittently driving an endless belt 66 by a pitch equal to the distance between neighboring absorptive regions 4 formed in the biochemical analysis unit 1, namely, the distance between neighboring stimulable phosphor layer regions 15 formed in the stimulable phosphor sheet 10.

The optical head 35 is fixed to the endless belt 66 and when the endless belt 66 is driven by the main scanning stepping motor 65, the optical head 35 is moved in the main scanning direction indicated by an arrow X in Figure 14.

In Figure 14, the reference numeral 67 designates a linear encoder for detecting the position of the optical head 35 in the main scanning direction and the reference numeral 68 designates slits of the linear encoder 67.

Therefore, the optical head 35 is moved in the main scanning direction indicated by the arrow X and the sub-scanning direction indicated by the arrow Y in Figure 14 by driving the endless belt 66 in the main scanning direction by the main scanning stepping motor 65 and intermittently moving the movable base plate 63 in the sub-scanning direction by the sub-scanning pulse motor 61, thereby scanning all of the stimulable phosphor layer regions 15 formed in the stimulable phosphor sheet 10 or all of the absorptive regions 4 formed in the substrate 2 of the biochemical analysis unit 1 with the laser beam 24.

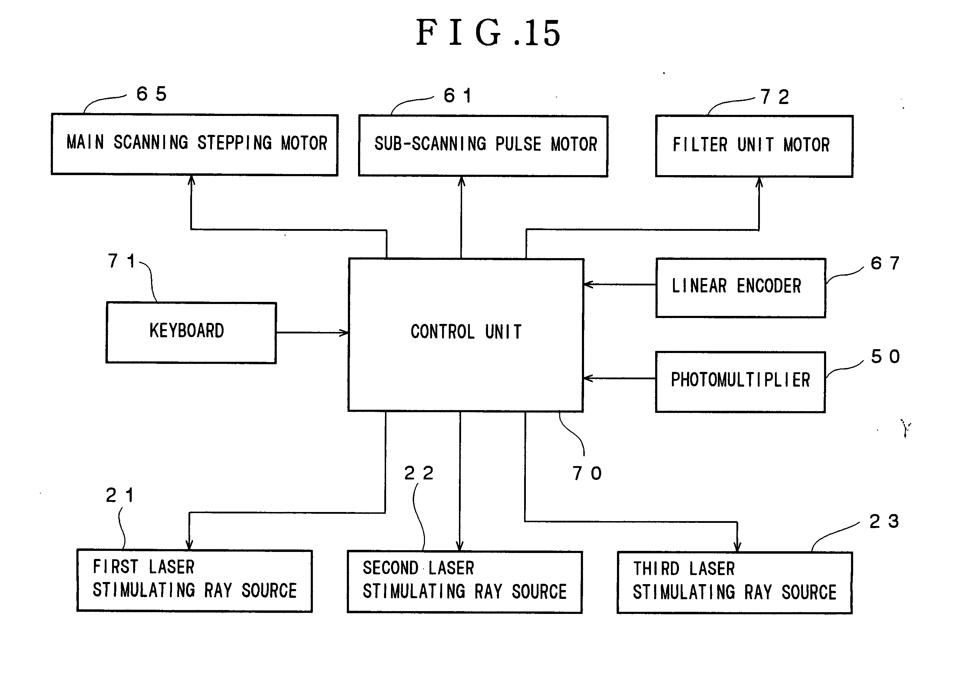

Figure 15 is a block diagram of a control system, an input system, a drive system and a detection system of the scanner shown in Figure 8.

As shown in Figure 15, the control system of the scanner includes a control unit 70 for controlling the overall operation of the first scanner and the data processing apparatus 54, and the input system of the scanner includes a keyboard 71 which can be operated by a user and through which various instruction signals can be input.

As shown in Figure 15, the drive system of the scanner includes the main scanning stepping motor 65 for intermittently moving the optical head 35 in the main scanning direction, the sub-scanning pulse motor 61 for moving the optical head 35 in the sub-scanning direction and a filter unit motor 72 for moving the filter unit 48 provided with the four filter members 51a, 51b, 51c and 51d.

The control unit 70 is adapted for selectively outputting a drive signal to the first laser stimulating ray source 21, the second laser stimulating ray source 22 or the third laser stimulating ray source 23 and outputting a drive signal to the filter unit motor 72.

As shown in Figure 15, the detection system of the scanner includes the photomultiplier 50 and the linear encoder 67 for detecting the position of the optical head 35 in the main scanning direction.

In this embodiment, the control unit 70 is adapted to control the on and off operation of the first laser stimulating ray source 21, the second laser stimulating ray source 22 or the third laser stimulating ray source 23 in accordance with a detection signal indicating the position of the optical head 35 input from the linear encoder 67.

The thus constituted scanner reads radiation data recorded in a stimulable phosphor sheet 10 by exposing a number of the stimulable phosphor layer regions 15 to a radioactive labeling substance contained in a number of the absorptive regions 4 formed in the substrate 2 of the biochemical analysis unit 1 and produces biochemical analysis data in the following manner.

A stimulable phosphor sheet 10 is first set on the glass plate 41 of the stage 40 by a user.

An instruction signal indicating that radiation data recorded in the stimulable phosphor layer region 15 formed in the stimulable phosphor sheet 10 are to be read is then input through the keyboard 71.

The instruction signal input through the keyboard 71 is input to the control unit 70 and the control unit 70 outputs a drive signal to the filter unit motor 72 in accordance with the instruction signal, thereby moving the filter unit 48 so as to locate the filter member 51d provided with the filter 52d having a property of transmitting only light having a wavelength corresponding to that of stimulated emission emitted from stimulable phosphor but cutting off light having a wavelength of 640 nm in the optical path of stimulated emission 45.

The control unit 70 further outputs a drive signal to the main scanning stepping motor 65 to move the optical head 35 in the main scanning direction and when it determines based on a detection signal indicating the position of the optical head 35 input from the linear encoder 67 that the optical head 35 has reached a position where a laser beam 24 can be projected onto a first stimulable phosphor layer region 15 among a number of the stimulable phosphor layer regions 15 formed in the stimulable phosphor sheet 10, it outputs a drive stop signal to the main scanning stepping motor 65 and a drive signal to the first stimulating ray source 21, thereby actuating it to emit a laser beam 24 having a wavelength of 640 nm.

A laser beam 24 emitted from the first laser stimulating source 21 passes through the collimator lens 25, thereby being made a parallel beam, and is reflected by the mirror 26.

The laser beam 24 reflected by the mirror 26 passes through the first dichroic mirror 27 and the second dichroic mirror 28 and advances to the mirror 29.

The laser beam 24 advancing to the mirror 29 is reflected by the mirror 29 and advances to the mirror 32 to be reflected thereby.

The laser beam 24 reflected by the mirror 32 passes through the hole 33 of the perforated mirror 34 and advances to the concave mirror 38.

The laser beam 24 advancing to the concave mirror 38 is reflected by the concave mirror 38 and enters the optical head 35.

The laser beam 24 entering the optical head 35 is reflected by the mirror 36 and condensed by the aspherical lens 37 onto the first stimulable phosphor layer region 15 of the stimulable phosphor sheet 10 placed on the glass plate 41 of a stage 40.

In this embodiment, since the stimulable phosphor layer regions 15 are formed by pressing the stimulable phosphor membrane 11 into a number of the through-holes 12 formed in the nickel substrate 13 capable of attenuating light energy, it is possible to effectively prevent the laser beam 24 from scattering in each of the stimulable phosphor layer regions 15 and entering the neighboring stimulable phosphor layer regions 15 to excite stimulable phosphor contained in the neighboring stimulable phosphor layer regions 15.

When the laser beam 24 impinges onto the first stimulable phosphor layer region 15 formed in the stimulable phosphor sheet 10, stimulable phosphor contained in the first stimulable phosphor layer region 15 formed in the stimulable phosphor sheet 10 is excited by the laser beam 24, thereby releasing stimulated emission 45 from the first stimulable phosphor layer region 15.

The stimulated emission 45 released from the first stimulable phosphor layer region 15 is condensed onto the mirror 36 by the aspherical lens 37 provided in the optical head 35 and reflected by the mirror 36 on the side of the optical path of the laser beam 24, thereby being made a parallel beam to advance to the concave mirror 38.

The stimulated emission 45 advancing to the concave mirror 38 is reflected by the concave mirror 38 and advances to the perforated mirror 34.

As shown in Figure 9, the stimulated emission 45 advancing to the perforated mirror 34 is reflected downward by the perforated mirror 34 formed as a concave mirror and advances to the filter 52d of the filter unit 48.

Since the filter 52d has a property of transmitting only light having a wavelength corresponding to that of stimulated emission emitted from stimulable phosphor and cutting off light having a wavelength of 640 nm, light having a wavelength of 640 nm corresponding to that of the stimulating ray is cut off by the filter 52d and only light having a wavelength corresponding to that of stimulated emission passes through the filter 52d to be photoelectrically detected by the photomultiplier 50.

Analog data produced by photoelectrically detecting stimulated emission 45 with the photomultiplier 50 are converted by an A/D converter 53 into digital data and the digital data are fed to a data processing apparatus 54.

When a predetermined time, for example, several microseconds, has passed after the first stimulating ray source 21 was turned on, the control unit 70 outputs a drive stop signal to the first stimulating ray source 21, thereby turning it off and outputs a drive signal to the main scanning stepping motor 65, thereby moving the optical head 35 by one pitch equal to the distance between neighboring stimulable phosphor layer regions 15 of the stimulable phosphor sheet 10.

When the control unit 70 determines based on a detection signal indicating the position of the optical head 35 input from the linear encoder 67 that the optical head 35 has been moved by one pitch equal to the distance between neighboring stimulable phosphor layer regions 15 and has reached a position where a laser beam 24 can be projected onto a second stimulable phosphor layer region 15 next to the first stimulable phosphor layer region 15 formed in the stimulable phosphor sheet 10, it outputs a drive signal to the first stimulating ray source 21 to turn it on, thereby causing the laser beam 24 to excite stimulable phosphor contained in the second stimulable phosphor layer region 15 formed in the stimulable phosphor sheet 10 next to the first stimulable phosphor layer region 15.

Similarly to the above, the second stimulable phosphor layer region 15 formed in the stimulable phosphor sheet 10 is irradiated with the laser beam 24 for a predetermined time and when stimulated emission 45 released from the second stimulable phosphor layer region 15 is photoelectrically detected by the photomultiplier 50, the control unit 70 outputs a drive stop signal to the first stimulating ray source 21, thereby turning it off and outputs a drive signal to the main scanning stepping motor 65, thereby moving the optical head 35 by one pitch equal to the distance between neighboring stimulable phosphor layer regions 15.

In this manner, the on and off operation of the first stimulating ray source 21 is repeated in synchronism with the intermittent movement of the optical head 35 and when the control unit 70 determines based on a detection signal indicating the position of the optical head 35 input from the linear encoder 67 that the optical head 35 has been moved by one scanning line in the main scanning direction and that the stimulable phosphor layer regions 15 included in a first line of the stimulable phosphor layer regions 15 formed in the stimulable phosphor sheet 10 have been scanned with the laser beam 24, it outputs a drive signal to the main scanning stepping motor 65, thereby returning the optical head 35 to its original position and outputs a drive signal to the sub-scanning pulse motor 61, thereby causing it to move the movable base plate 63 by one scanning line in the sub-scanning direction.

When the control unit 70 determines based on a detection signal indicating the position of the optical head 35 input from the linear encoder 67 that the optical head 35 has been returned to its original position and determines that the movable base plate 63 has been moved by one scanning line in the sub-scanning direction, similarly to the manner in which the stimulable phosphor layer regions 15 included in the first line of the stimulable phosphor layer regions 15 formed in the stimulable phosphor sheet 10 were sequentially irradiated with the laser beam 24 emitted from the first laser stimulating ray source 21, the stimulable phosphor layer regions 15 included in a second line of the stimulable phosphor layer regions 15 formed in the stimulable phosphor sheet 10 are sequentially irradiated with the laser beam 24 emitted from the first laser stimulating ray source 21, thereby exciting stimulable phosphor contained in the stimulable phosphor layer regions 15 included in the second line and stimulated emission 45 released from the stimulable phosphor layer regions 15 is sequentially and photoelectrically detected by the photomultiplier 50.

Analog data produced by photoelectrically detecting stimulated emission 45 with the photomultiplier 50 are converted by an A/D converter 53 into digital data and the digital data are fed to a data processing apparatus 54.

When all of the stimulable phosphor layer regions 15 formed in the stimulable phosphor sheet 10 have been scanned with the laser beam 24 to excite stimulable phosphor contained in the stimulable phosphor layer regions 15 and digital data produced by photoelectrically detecting stimulated emission 45 released from the stimulable phosphor layer regions 15 by the photomultiplier 50 to produce analog data and digitizing the analog data by the A/D converter 53 have been forwarded to the data processing apparatus 54, the control unit 70 outputs a drive stop signal to the first laser stimulating ray source 21, thereby turning it off.

As described above, radiation data of the radioactive labeling substance recorded in a number of the stimulable phosphor layer regions 15 of the stimulable phosphor sheet 10 are read by the first scanner to produce biochemical analysis data.

On the other hand, when fluorescence data of a fluorescent substance recorded in a number of the absorptive regions 4 formed in the substrate 2 of the biochemical analysis unit 1 are to be read to produce biochemical analysis data, the biochemical analysis unit 1 is first set by the user on the glass plate 41 of the stage 40.

An instruction signal identifying the kind of a fluorescent substance such as a fluorescent dye labeling a substance derived from a living organism is then input by the user through the keyboard 71.

When the kind of fluorescent substance is input by the user through the keyboard 71, the control unit 70 selects a laser stimulating ray source for emitting a laser beam 24 of a wavelength capable of efficiently stimulating the input fluorescent substance from among the first laser stimulating ray source 21, the second laser stimulating ray source 22 and the third laser stimulating ray source 23 and selects the filter member for cutting light having a wavelength of the laser beam 24 to be used for stimulating the input fluorescent substance and transmitting light having a longer wavelength than that of the laser beam to be used for stimulation from among the three filter members 51a, 51b and 51c.

Similarly to the case where radiation data recorded in a number of the stimulable phosphor layer regions 15 of the stimulable phosphor sheet 10 are read, all of the absorptive regions 4 formed in the substrate 2 of the biochemical analysis unit 1 are scanned by the laser beam 24, thereby stimulating a fluorescent substance contained in the absorptive regions 4, fluorescence emission 45 released from the fluorescent substance is photoelectrically detected by the photomultiplier 50 to produce analog data and the analog data are digitized by the A/D converter 53 to be forwarded to the data processing apparatus 54.

In this embodiment, since the absorptive regions 4 of the biochemical analysis unit 1 are formed by embedding nylon-6 in the through-holes 3 formed in the substrate 2 made of stainless steel capable of attenuating light energy, it is possible to effectively prevent the laser beam 24 from scattering in each of the absorptive regions 4 and entering the neighboring absorptive regions 4 to excite a fluorescent substance contained in the neighboring absorptive regions 4.

In this manner, fluorescence data of the fluorescent substance are read by the first scanner to produce biochemical analysis data.

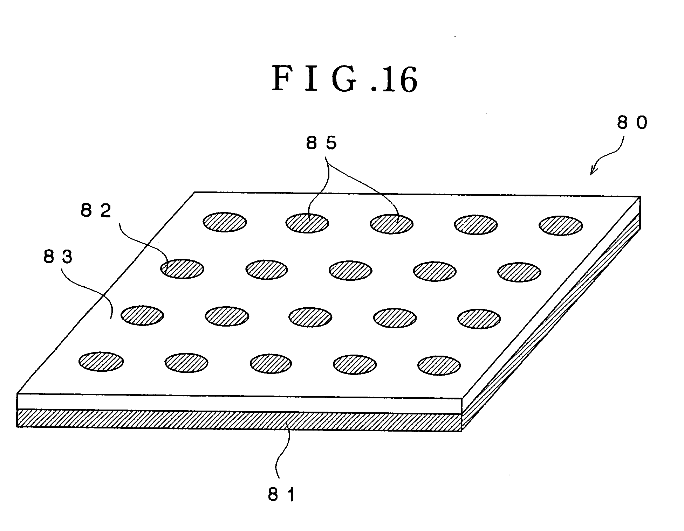

Figure 16 is a schematic perspective view showing another stimulable phosphor sheet which is a preferred embodiment of the present invention.

A stimulable phosphor sheet 80 shown in Figure 16 has the same configuration as that of the stimulable phosphor sheet 10 shown in Figures 5 and 6 except that a stimulable phosphor membrane 81 contains SrS system stimulable phosphor capable of absorbing and storing light energy and a binder and that a number of stimulable phosphor layer regions 85 are dot-like formed by pressing the stimulable phosphor membrane 81 into a number of through-holes 82 formed in a substrate 83 made of stainless steel.

Chemiluminescence data recorded in a number of the absorptive regions 4 of the biochemical analysis unit 1 are transferred onto a number of the stimulable phosphor layer regions 85 of the stimulable phosphor 80 shown in Figure 16.

When chemiluminescence data recorded in a number of the absorptive regions 4 of the biochemical analysis unit 1 are to be transferred onto a number of the stimulable phosphor layer regions 85 of the stimulable phosphor 80, a number of the absorptive regions 4 of the biochemical analysis unit 1 are first brought into contact with a chemiluminescent substrate.

As a result, chemiluminescence emission in a wavelength of visible light is selectively released from a number of the absorptive regions 4 of the biochemical analysis unit 1.

The stimulable phosphor sheet 80 is then superposed on the biochemical analysis unit 1 formed with a number of the absorptive regions 4 selectively releasing chemiluminescence emission in such a manner that a number of the stimulable phosphor layer regions 85 formed in the stimulable phosphor sheet 80 face the corresponding absorptive regions 4 formed in the substrate 2 of the biochemical analysis unit 1.

In this manner, each of the stimulable phosphor layer regions 85 formed in the stimulable phosphor sheet 80 is kept to face the corresponding absorptive region 4 formed in the substrate 2 of the biochemical analysis unit 1 for a predetermined time period, whereby a number of the stimulable phosphor layer regions 85 formed in the stimulable phosphor sheet 80 are exposed to chemiluminescence emission released from a number of the absorptive regions 4 formed in the substrate 2 of the biochemical analysis unit 1.

In this embodiment, since a number of the absorptive regions 4 of the biochemical analysis unit 1 are formed spaced apart from each other in the substrate 2 made of stainless steel and the substrate 2 made of stainless steel capable of attenuating light energy is present around each of the absorptive regions 4, chemiluminescence emission released from the absorptive regions 4 of the biochemical analysis unit 1 during the exposure operation can be efficiently prevented from scattering in the substrate 2 of the biochemical analysis unit 1. Further, since a number of the stimulable phosphor layer regions 85 of the stimulable phosphor sheet 80 are formed by pressing the stimulable phosphor membrane 81 into a number of the through-holes 82 formed in the substrate 83 made of stainless steel and the substrate 83 made of stainless steel capable of attenuating light energy is present around each of the stimulable phosphor layer regions 85, chemiluminescence emission released from the absorptive regions 4 of the biochemical analysis unit 1 during the exposure operation can be efficiently prevented from scattering in the substrate 83 of the stimulable phosphor sheet 80. Therefore, it is possible to selectively expose only the stimulable phosphor layer region 85 each of the absorptive regions 4 faces to the chemiluminescence emission released from the absorptive regions 4 of the biochemical analysis unit 1.

In this manner, chemiluminescence data are recorded in a number of the stimulable phosphor layer regions 85 formed in the stimulable phosphor sheet 80.

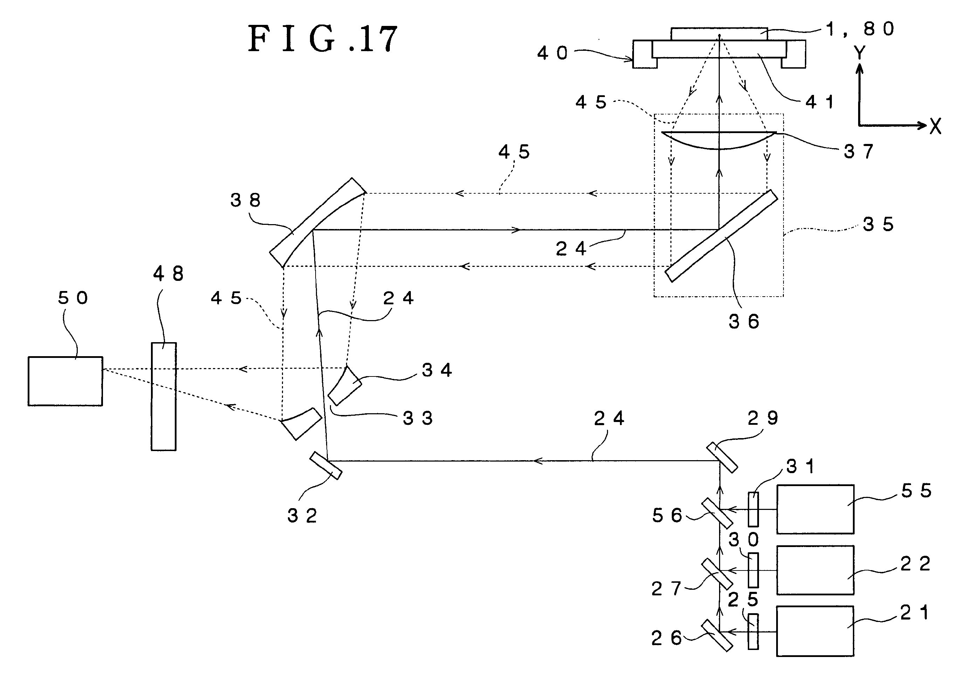

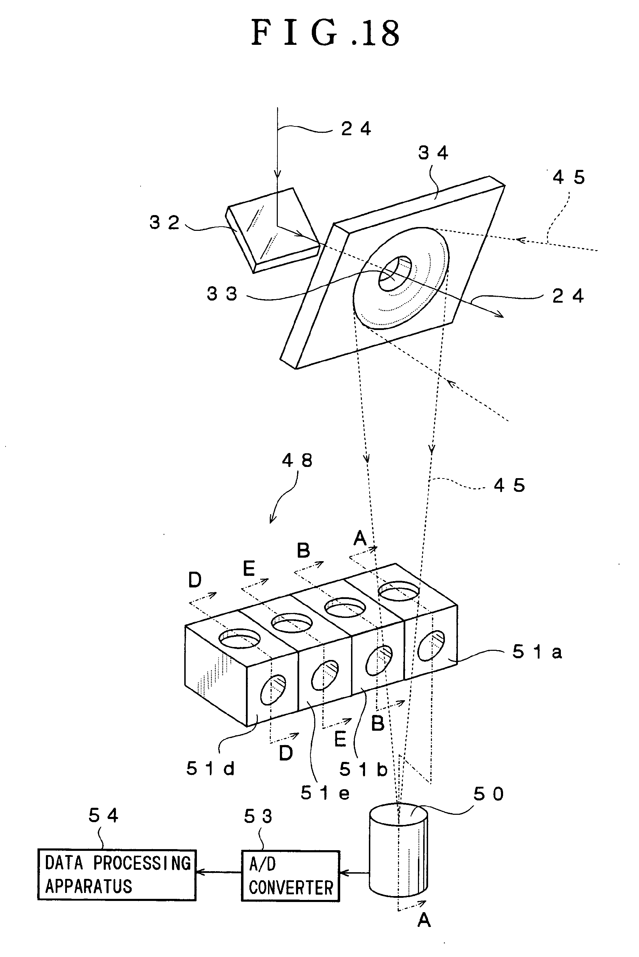

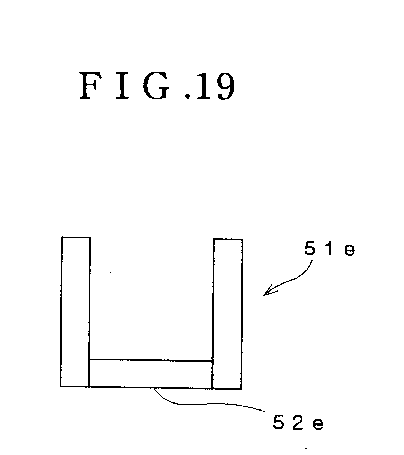

Figure 17 is a schematic perspective view showing a scanner for reading chemiluminescence data recorded in a number of the stimulable phosphor layer regions 85 formed in the stimulable phosphor sheet 80 and producing biochemical analysis data. Figure 18 is a schematic perspective view showing details in the vicinity of a photomultiplier of a scanner shown in Figure 17 and Figure 19 is a schematic cross-sectional view taken along a line E-E in Figure 18.

A scanner shown in Figures 17 to 19 has the same configuration as that of the scanner shown in Figures 8 to 15 except that it includes a fourth laser stimulating ray source 55 for emitting a laser beam 24 having a wavelength of 980 nm which can effectively stimulate SrS system stimulable phosphor instead of the third laser stimulating ray source 23 for emitting a laser beam 24 having a wavelength of 473 nm, includes a filter member 51e provided with a filter having a property of transmitting only light having a wavelength corresponding to that of stimulated emission emitted from stimulable phosphor and cutting off light having a wavelength of 980 nm, and includes a third dichroic mirror 56 for transmitting light having a wavelength equal to and shorter than 640 nm but reflecting light having a wavelength of 980 nm instead of the second dichroic mirror 28 for transmitting light having a wavelength equal to and longer than 532 nm but reflecting light having a wavelength of 473 nm.

The thus constituted scanner reads chemiluminescence data recorded in a number of the stimulable phosphor layer regions 85 of the stimulable phosphor sheet 80 and produces biochemical analysis data in the following manner.

A stimulable phosphor sheet 80 is first set on the glass plate 41 of the stage 40 by a user.

An instruction signal indicating that radiation data recorded in the stimulable phosphor layer 85 formed in the stimulable phosphor sheet 80 are to be read is then input through the keyboard 71.

The instruction signal input through the keyboard 71 is input to the control unit 70 and the control unit 70 outputs a drive signal to the filter unit motor 72 in accordance with the instruction signal, thereby moving the filter unit 48 so as to locate the filter member 51e provided with a filter 52e (Figure 19) having a property of transmitting only light having a wavelength corresponding to that of stimulated emission emitted from the stimulable phosphor layer regions 85 and cutting off light having a wavelength of 980 nm in the optical path of stimulated emission 45.

The control unit 70 further outputs a drive signal to the main scanning stepping motor 65 to move the optical head 35 in the main scanning direction and when it determines based on a detection signal indicating the position of the optical head 35 input from the linear encoder 67 that the optical head 35 has reached a position where a laser beam 24 can be projected onto a first stimulable phosphor layer region 85 among a number of the stimulable phosphor layer regions 85 formed in the stimulable phosphor sheet 80, it outputs a drive stop signal to the main scanning stepping motor 65 and a drive signal to the fourth stimulating ray source 55, thereby actuating it to emit a laser beam 24 having a wavelength of 980 nm.

A laser beam 24 emitted from the third laser stimulating ray source 23 passes through a collimator lens 31, thereby being made a parallel beam, and is reflected by the third dichroic mirror 56, thereby changing its direction by 90 degrees. The laser beam 24 then advances to the mirror 29.

The laser beam 24 advancing to the mirror 29 is reflected by the mirror 29 and advances to the mirror 32 to be reflected thereby.

The laser beam 24 reflected by the mirror 32 passes through the hole 33 of the perforated mirror 34 and advances to the concave mirror 38.

The laser beam 24 advancing to the concave mirror 38 is reflected by the concave mirror 38 and enters the optical head 35.

The laser beam 24 entering the optical head 35 is reflected by the mirror 36 and condensed by the aspherical lens 37 onto the first stimulable phosphor layer region 85 of the stimulable phosphor sheet 80 placed on the glass plate 41 of a stage 40.

In this embodiment, since the stimulable phosphor layer regions 85 are formed by pressing the stimulable phosphor membrane 81 into a number of the through-holes 82 formed in the substrate 83 made of stainless steel, it is possible to effectively prevent the laser beam 24 from scattering in each of the stimulable phosphor layer regions 85 and entering the neighboring stimulable phosphor layer regions 85 to excite stimulable phosphor contained in the neighboring stimulable phosphor layer regions 85.

When the laser beam 24 impinges onto the first stimulable phosphor layer region 85 formed in the stimulable phosphor sheet 80, stimulable phosphor contained in the first stimulable phosphor layer region 85 formed in the stimulable phosphor sheet 80 is excited by the laser beam 24, thereby releasing stimulated emission 45 from the first stimulable phosphor layer region 85.

The stimulated emission 45 released from the first stimulable phosphor layer region 85 of the stimulable phosphor sheet 80 is condensed onto the mirror 36 by the aspherical lens 37 provided in the optical head 35 and reflected by the mirror 36 on the side of the optical path of the laser beam 24, thereby being made a parallel beam to advance to the concave mirror 38.

The stimulated emission 45 advancing to the concave mirror 38 is reflected by the concave mirror 38 and advances to the perforated mirror 34.

As shown in Figure 18, the stimulated emission 45 advancing to the perforated mirror 34 is reflected downward by the perforated mirror 34 formed as a concave mirror and advances to the filter 52e of the filter unit 48.

Since the filter 52e has a property of transmitting only light having a wavelength corresponding to that of stimulated emission emitted from stimulable phosphor and cutting off light having a wavelength of 980 nm, light having a wavelength of 980 nm corresponding to that of the stimulating ray is cut off by the filter 52e and only light having a wavelength corresponding to that of stimulated emission passes through the filter 52e to be photoelectrically detected by the photomultiplier 50.

Analog data produced by photoelectrically detecting stimulated emission 45 with the photomultiplier 50 are converted by an A/D converter 53 into digital data and the digital data are fed to a data processing apparatus 54.

When a predetermined time has passed after the fourth stimulating ray source 55 was turned on, the control unit 70 outputs a drive stop signal to the fourth stimulating ray source 55, thereby turning it off and outputs a drive signal to the main scanning stepping motor 65, thereby moving the optical head 35 by one pitch equal to the distance between neighboring stimulable phosphor layer regions 85 of the stimulable phosphor sheet 80.

When the control unit 70 determines based on a detection signal indicating the position of the optical head 35 input from the linear encoder 67 that the optical head 35 has been moved by one pitch equal to the distance between neighboring stimulable phosphor layer regions 85, it outputs a drive signal to the fourth stimulating ray source 55 to turn it on, thereby causing the laser beam 24 to excite stimulable phosphor contained in a second stimulable phosphor layer region 85 formed in the stimulable phosphor sheet 80 next to the first stimulable phosphor layer region 85.

Similarly to the above, the second stimulable phosphor layer region 85 formed in the stimulable phosphor sheet 80 is irradiated with the laser beam 24 for a predetermined time and when stimulated emission 45 released from the second stimulable phosphor layer region 85 is photoelectrically detected by the photomultiplier 50, the control unit 70 outputs a drive stop signal to the fourth stimulating ray source 55, thereby turning it off and outputs a drive signal to the main scanning stepping motor 65, thereby moving the optical head 35 by one pitch equal to the distance between neighboring stimulable phosphor layer regions 85.

In this manner, the on and off operation of the fourth stimulating ray source 55 is repeated in synchronism with the intermittent movement of the optical head 35 and when the control unit 70 determines based on a detection signal indicating the position of the optical head 35 input from the linear encoder 67 that the optical head 35 has been moved by one scanning line in the main scanning direction and that the stimulable phosphor layer regions 85 included in a first line of the stimulable phosphor layer regions 85 formed in the stimulable phosphor sheet 80 have been scanned with the laser beam 24, it outputs a drive signal to the main scanning stepping motor 65, thereby returning the optical head 35 to its original position and outputs a drive signal to the sub-scanning pulse motor 61, thereby causing it to move the movable base plate 63 by one scanning line in the sub-scanning direction.

When the control unit 70 determines based on a detection signal indicating the position of the optical head 35 input from the linear encoder 67 that the optical head 35 has been returned to its original position and determines that the movable base plate 63 has been moved by one scanning line in the sub-scanning direction, similarly to the manner in which the stimulable phosphor layer regions 85 included in the first line of the stimulable phosphor layer regions 85 formed in the stimulable phosphor sheet 80 were sequentially irradiated with the laser beam 24 emitted from the fourth laser stimulating ray source 55, the stimulable phosphor layer regions 85 included in a second line of the stimulable phosphor layer regions 85 formed in the stimulable phosphor sheet 80 are sequentially irradiated with the laser beam 24 emitted from the fourth laser stimulating ray source 55, thereby exciting stimulable phosphor contained in the stimulable phosphor layer regions 85 included in the second line and stimulated emission 45 released from the stimulable phosphor layer regions 85 is sequentially and photoelectrically detected by the photomultiplier 50.

Analog data produced by photoelectrically detecting stimulated emission 45 with the photomultiplier 50 are converted by an A/D converter 53 into digital data and the digital data are fed to a data processing apparatus 54.

When all of the stimulable phosphor layer regions 85 formed in the stimulable phosphor sheet 80 have been scanned with the laser beam 24 to excite stimulable phosphor contained in the stimulable phosphor layer regions 85 and digital data produced by photoelectrically detecting stimulated emission 45 released from the stimulable phosphor layer regions 85 by the photomultiplier 50 to produce analog data and digitizing the analog data by the A/D converter 53 have been forwarded to the data processing apparatus 54, the control unit 70 outputs a drive stop signal to the fourth laser stimulating ray source 55, thereby turning it off.

As described above, chemiluminescence data recorded in a number of the stimulable phosphor layer regions 85 of the stimulable phosphor sheet 80 are read by the scanner to produce biochemical analysis data.

According to this embodiment, when a number of the stimulable phosphor layer regions 15 formed in the stimulable phosphor sheet 10 are exposed to a radioactive labeling substance selectively contained in a number of the absorptive regions 4 formed in the substrate 2 of the biochemical analysis unit 1, since a number of the absorptive regions 4 of the biochemical analysis unit 1 are formed spaced apart from each other in the substrate 2 made of stainless steel and the substrate 2 made of stainless steel capable of attenuating radiation energy is present around each of the absorptive regions 4, electron beams (β rays) released from the radioactive labeling substance contained in the absorptive regions 4 of the biochemical analysis unit 1 can be efficiently prevented from scattering in the substrate 2 of the biochemical analysis unit 1. Further, since a number of the stimulable phosphor layer regions 15 of the stimulable phosphor sheet 10 are formed by pressing the stimulable phosphor membrane 11 containing stimulable phosphor and a binder into a number of the through-holes 12 formed in the nickel substrate 13 and the nickel substrate 13 capable of attenuating radiation energy is present around each of the stimulable phosphor layer regions 15, electron beams (β rays) released from the radioactive labeling substance contained in the absorptive regions 4 of the biochemical analysis unit 1 can be efficiently prevented from scattering in the nickel substrate 13 of the stimulable phosphor sheet 10. Therefore, since it is possible to selectively expose only the stimulable phosphor layer region 15 each of the absorptive regions 4 faces to the electron beams (β rays) released from the radioactive labeling substance contained in each of the absorptive regions 4, even in the case where the absorptive regions 4 are formed in the biochemical analysis unit 1 at high density, it is possible to produce biochemical analysis data having a high quantitative accuracy by scanning a number of the thus exposed stimulable phosphor layer regions 15 with the laser beam 24 and photoelectrically detecting stimulated emission 45 released from the stimulable phosphor layer regions 15 of the stimulable phosphor sheet 10 with high resolution.

Further, according to this embodiment, since the substrate 2 of the biochemical analysis unit 1 is made of stainless steel and capable of attenuating light energy, when a number of the stimulable phosphor layer regions 85 formed in the stimulable phosphor sheet 80 are exposed to chemiluminescence emission selectively released from a number of the absorptive regions 4 formed in the substrate 2 of the biochemical analysis unit 1, chemiluminescence emission selectively released from a number of the absorptive regions 4 formed in the substrate 2 of the biochemical analysis unit 1 can be effectively prevented from scattering in the substrate 2 of the biochemical analysis unit 1. Moreover, since a number of the stimulable phosphor layer regions 85 of the stimulable phosphor sheet 80 are formed by pressing the stimulable phosphor membrane 81 containing stimulable phosphor and a binder into a number of the through-holes 82 formed in the substrate 83 made of stainless steel in the same pattern as that of a number of the absorptive regions 4 formed in the substrate 2 of the biochemical analysis unit 1 and the stimulable phosphor sheet 80 is superposed on the biochemical analysis unit 1 in such a manner that each of the stimulable phosphor layer regions 85 faces the corresponding absorptive region 4 formed in the substrate 2 of the biochemical analysis unit 1, chemiluminescence emission released from the absorptive regions 4 of the biochemical analysis unit 1 can be effectively prevented from scattering in the substrate 83 of the stimulable phosphor sheet 80. Therefore, since it is possible to selectively expose only the stimulable phosphor layer region 85 each of the absorptive regions 4 faces to the chemiluminescence emission released from each of the absorptive regions 4, it is possible to prevent noise from being generated in biochemical analysis data produced by photoelectrically detecting stimulated emission 45 released from the stimulable phosphor layer regions 85 of the stimulable phosphor sheet 80 in response to the stimulation with the laser beam 24 and to produce biochemical analysis data having a high quantitative accuracy.

Furthermore, according to this embodiment, since a number of the stimulable phosphor layer regions 15, 85 of the stimulable phosphor sheet 10, 80 are formed by pressing the stimulable phosphor membrane 11, 81 containing stimulable phosphor and a binder using the calender processing apparatus into a number of the through-holes 12, 82 formed in the nickel substrate 13 or the stainless steel substrate 83 in the same pattern as that of a number of the absorptive regions 4 formed in the substrate 2 of the biochemical analysis unit 1, it is possible to extremely easily produce the stimulable phosphor sheet 10, 80 formed with a number of the stimulable phosphor layer regions 15, 85 in a regular pattern.

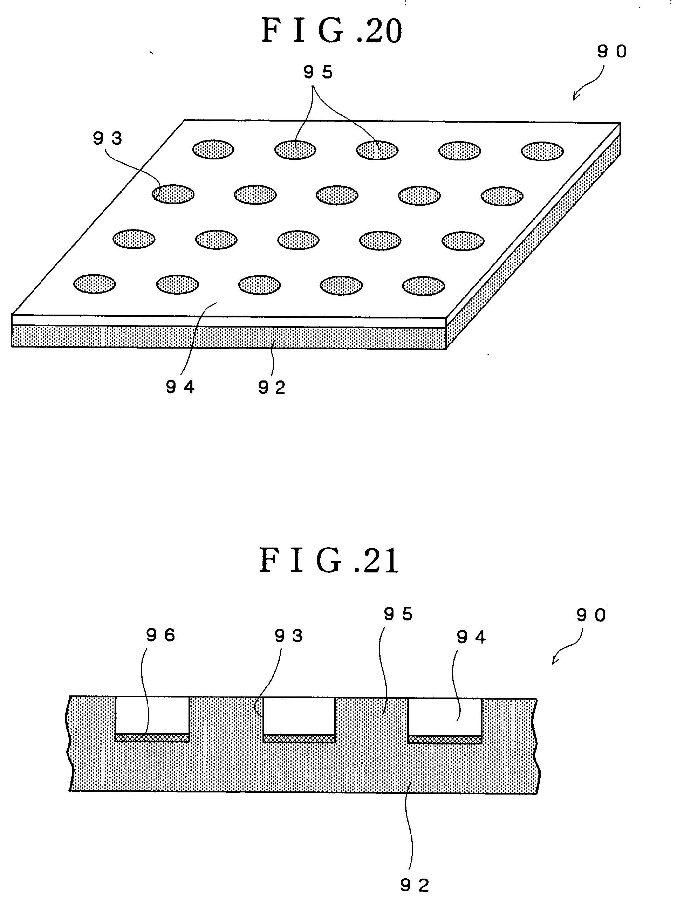

Figure 20 is a schematic perspective view showing another example of a biochemical analysis unit and Figure 21 is a schematic partial cross sectional view thereof.

As shown in Figures 20 and 21, a biochemical analysis unit 90 includes an absorptive membrane 92 formed of nylon-6 and a substrate 94 made of stainless steel and formed with a number of substantially circular through-holes 93 in a regular pattern and the absorptive membrane 92 is pressed into a number of the through-holes 93 formed in the substrate 94 using the calender processing apparatus shown in Figure 6, thereby regularly forming a number of absorptive regions 95 correspondingly to a number of the through-holes 93 formed in the substrate 94.

The absorptive membrane 92 and the substrate 94 are firmly bonded with an adhesive agent 96, thereby improving the durability of the biochemical analysis unit 90.

Although not accurately shown in Figure 20, about 10,000 substantially circular absorptive regions 95 having a size of about 0.01 mm² are regularly formed at a density of about 5,000 per cm² in the biochemical analysis unit 90.

As shown in Figure 21, the biochemical analysis unit 90 is produced by pressing absorptive membrane 92 into a number of the through-holes 93 formed in the substrate 94 so that the surface of the absorptive regions 95 and the surface of the substrate 94 lie at the same height level.

In this embodiment, similarly to the biochemical analysis unit 1, a solution containing specific binding substances such as cDNAs is spotted using the spotting device 5 onto a number of the absorptive regions 95 formed in the biochemical analysis unit 90 and the specific binding substances are absorbed in a number of the absorptive regions 95.

Since a number of the absorptive regions 95 of the biochemical analysis unit 90 shown in Figures 20 and 21 are formed by pressing the absorptive membrane 92 into a number of the through-holes 93 formed in the substrate 94, cavities in the absorptive membrane 92 have been eliminated by the pressing operation in regions between neighboring absorptive regions 95. Therefore, a solution of specific binding substances spotted in the absorptive regions 95 can be effectively prevented from permeating the absorptive membrane 92 and the specific binding substances are absorbed only in the absorptive regions 95.

Further, as shown in Figure 3, the biochemical analysis unit 90 is set in the hybridization reaction vessel 8 accommodating a hybridization reaction solution 9 containing a substance derived from a living organism and labeled with a radioactive labeling substance, a substance derived from a living organism and labeled with a labeling substance which generates chemiluminescence emission when it contacts a chemiluminescent substrate and a substance derived from a living organism and labeled with a fluorescent substance such as a fluorescent dye and specific binding substances absorbed in a number of the absorptive regions 95 of the biochemical analysis unit 90 are selectively hybridized with a substance derived from a living organism, labeled with a radioactive labeling substance and contained in the hybridization reaction solution 9, a substance derived from a living organism, labeled with a labeling substance which generates chemiluminescence emission when it contacts a chemiluminescent substrate and contained in the hybridization reaction solution 9 and a substance derived from a living organism, labeled with a fluorescent substance such as a fluorescent dye and contained in the hybridization reaction solution 9.

Thus, radiation data, chemiluminescence data and fluorescence data are recorded in a number of the absorptive regions 95 formed in the biochemical analysis unit 90.

Similarly to the previous embodiment, fluorescence data recorded in a number of the absorptive regions 95 of the biochemical analysis unit 90 are read by the scanner shown in Figures 8 to 15 to produce biochemical analysis data.

On the other hand, radiation data recorded in a number of the absorptive regions 95 of the biochemical analysis unit 90 are transferred onto a stimulable phosphor sheet and chemiluminescence data recorded in a number of the absorptive regions 95 of the biochemical analysis unit 90 are transferred onto another stimulable phosphor sheet.

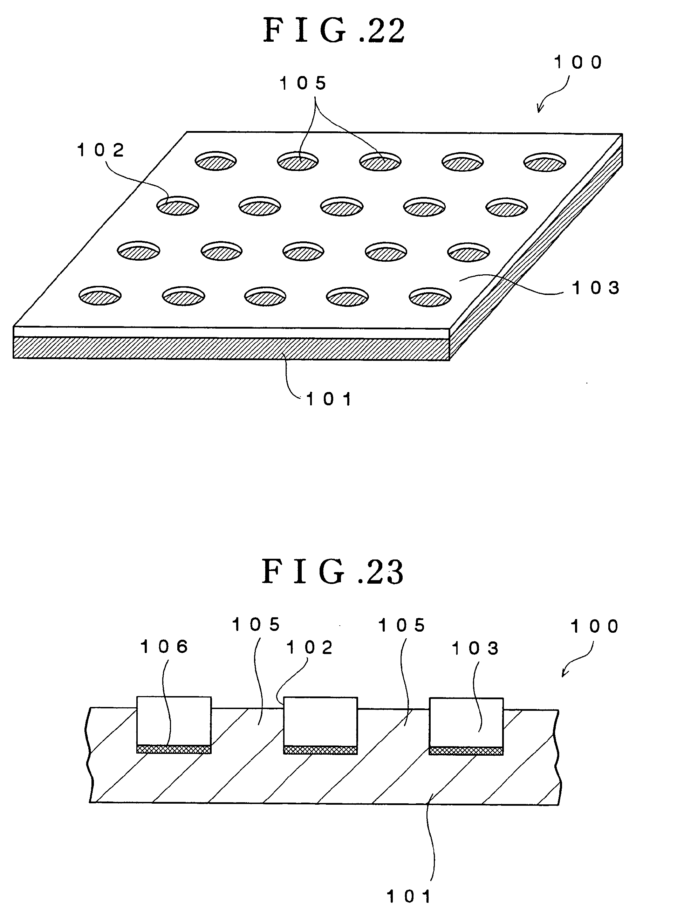

Figure 22 is a schematic perspective view showing a stimulable phosphor sheet onto which radiation data are to be transferred and Figure 23 is a schematic partial cross sectional view thereof.

As shown in Figures 22 and 23, a stimulable phosphor sheet 100 according to this embodiment includes a stimulable phosphor membrane 101 containing BaFX system stimulable phosphor (where X is at least one halogen atom selected from the group consisting of Cl, Br and I) capable of absorbing and storing radiation energy and a binder and a nickel substrate 103 regularly formed with a number of through-holes 102, and the stimulable phosphor membrane 101 is pressed into a number of the through-holes 102 formed in the nickel substrate 103, thereby dot-like forming a number of stimulable phosphor layer regions 105 at positions corresponding to those of a number of the through-holes 102 of the nickel substrate 103.

The surface of the nickel substrate 103 is coated with an adhesive agent 106 and the stimulable phosphor membrane 101 is pressed into a number of the through-holes 102 of the nickel substrate 103 sandwiching the adhesive agent 106, whereby the stimulable phosphor membrane 101 is firmly bonded to the nickel substrate 103 to improve the durability of the stimulable phosphor sheet 100.

A number of the through-holes 102 are formed in the nickel substrate 103 in the same pattern as that of a number of the absorptive regions 95 formed in the biochemical analysis unit 90 and each of a number of the through-holes 102 has the same size as that of each of a number of the absorptive regions 95 formed in the biochemical analysis unit 90.

Therefore, although not accurately shown in Figure 22, in this embodiment, about 10,000 substantially circular stimulable phosphor layer regions 105 having a size of about 0.01 mm² are dot-like formed in a regular pattern at a density of about 5,000 per cm² in the stimulable phosphor sheet 100.

As shown in Figure 23, the stimulable phosphor sheet 100 is prepared by pressing the stimulable phosphor membrane 101 into a number of the through-holes 102 of the nickel substrate 103 in such a manner that the surface of the nickel substrate 103 lies at a higher level than that of the surfaces of the stimulable phosphor layer regions 105.

In this embodiment, the stimulable phosphor sheet 100 is prepared by pressing the stimulable phosphor membrane 101 into a number of the through-holes 102 of the nickel substrate 103 by a heat press apparatus.

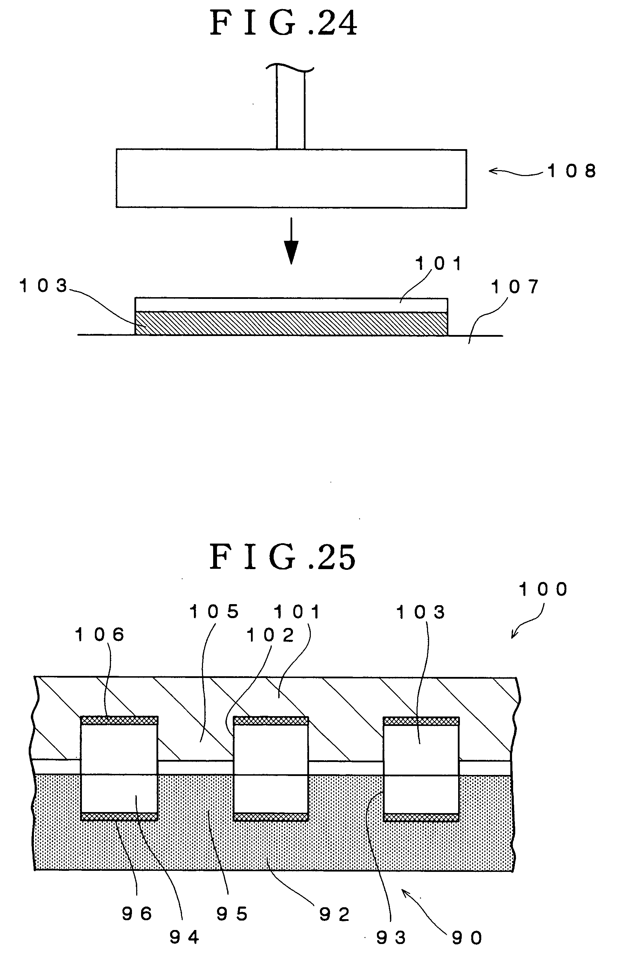

Figure 24 is a schematic cross sectional view showing a heat press apparatus.

As shown in Figure 24, a heat press apparatus includes a base 107 and a temperature-controlled press plate 108.

The nickel substrate 103 formed with a number of the through-holes 102 is first set on the base 107 and the stimulable phosphor membrane 101 prepared in the manner of the previous embodiment is set on the nickel substrate 103.

Then, the stimulable phosphor membrane 101 is pressed by the press plate 108, thereby pressing the stimulable phosphor membrane 101 into a number of the through-holes 102 formed in the nickel substrate 103 to form a number of the stimulable phosphor layer regions 105.

Figure 25 is a schematic cross-sectional view showing a method for exposing a number of the stimulable phosphor layer regions 105 formed in the stimulable phosphor sheet 100 to a radioactive labeling substance selectively contained in a number of the absorptive layers 95 formed in the biochemical analysis unit 90.

As shown in Figure 25, when the stimulable phosphor layer regions 105 of a stimulable phosphor sheet 100 are to be exposed, the stimulable phosphor sheet 100 is superposed on the biochemical analysis unit 90 in such a manner that a number of the absorptive regions 95 formed in the biochemical analysis unit 90 face the corresponding stimulable phosphor layer regions 105 formed in the stimulable phosphor sheet 100.

In this embodiment, since the biochemical analysis unit 90 is formed by pressing the absorptive membrane 92 into a number of the through-holes 93 formed in the substrate 94 made of stainless steel, the biochemical analysis unit 90 does not stretch or shrink when it is subjected to liquid processing such as hybridization and, therefore, it is possible to easily and accurately superpose the stimulable phosphor sheet 100 on the biochemical analysis unit 90 so that each of the stimulable phosphor layer regions 105 formed in the stimulable phosphor sheet 100 accurately faces the corresponding absorptive region 95 formed in the biochemical analysis unit 90, thereby exposing a number of the stimulable phosphor layer regions 105.

In this manner, each of the stimulable phosphor layer regions 105 formed in the stimulable phosphor sheet 100 is kept to face the corresponding absorptive region 95 formed in the biochemical analysis unit 90 for a predetermined time period, whereby a number of the stimulable phosphor layer regions 105 formed in the stimulable phosphor sheet 100 are exposed to the radioactive labeling substance selectively contained in a number of the absorptive regions 95 formed in the biochemical analysis unit 90.

During the exposure operation, electron beams (β rays) are released from the radioactive labeling substance contained in the absorptive regions 95 of the biochemical analysis unit 90. However, since a number of the absorptive regions 95 of the biochemical analysis unit 90 are formed by pressing the absorptive membrane 92 into a number of the through-holes 93 formed in the substrate 94 made of stainless steel and the substrate 94 made of stainless steel capable of attenuating radiation energy is present around each of the absorptive regions 95, electron beams (β rays) released from the radioactive labeling substance contained in the absorptive regions 95 of the biochemical analysis unit 90 can be efficiently prevented from scattering in the substrate 94 of the biochemical analysis unit 90. Further, since a number of the stimulable phosphor layer regions 105 of the stimulable phosphor sheet 100 are formed by pressing the stimulable phosphor membrane 101 into a number of the through-holes 102 formed in the nickel substrate 103 and the nickel substrate 103 capable of attenuating radiation energy is present around each of the stimulable phosphor layer regions 105, electron beams (β rays) released from the radioactive labeling substance contained in the absorptive regions 95 of the biochemical analysis unit 90 can be efficiently prevented from scattering in the nickel substrate 103 of the stimulable phosphor sheet 100. Therefore, it is possible to selectively expose only the stimulable phosphor layer region 105 each of the absorptive regions 95 faces to the electron beams (β rays) released from the radioactive labeling substance contained in each of the absorptive regions 95.

In this manner, radiation data of a radioactive labeling substance are recorded in a number of the stimulable phosphor layer regions 105 formed in the stimulable phosphor sheet 100 and similarly to the previous embodiment, the radiation data recorded in a number of the stimulable phosphor layer regions 105 formed in the stimulable phosphor sheet 100 are read by the scanner shown in Figures 8 to 15 to produce biochemical analysis data.

On the other hand, fluorescence data recorded in a number of the absorptive regions 95 formed in the biochemical analysis unit 90 are read by the scanner shown in Figures 8 to 15 to produce biochemical analysis data.

To the contrary, chemiluminescence data recorded in a number of the absorptive regions 95 formed in the biochemical analysis unit 90 are transferred onto a stimulable phosphor sheet.

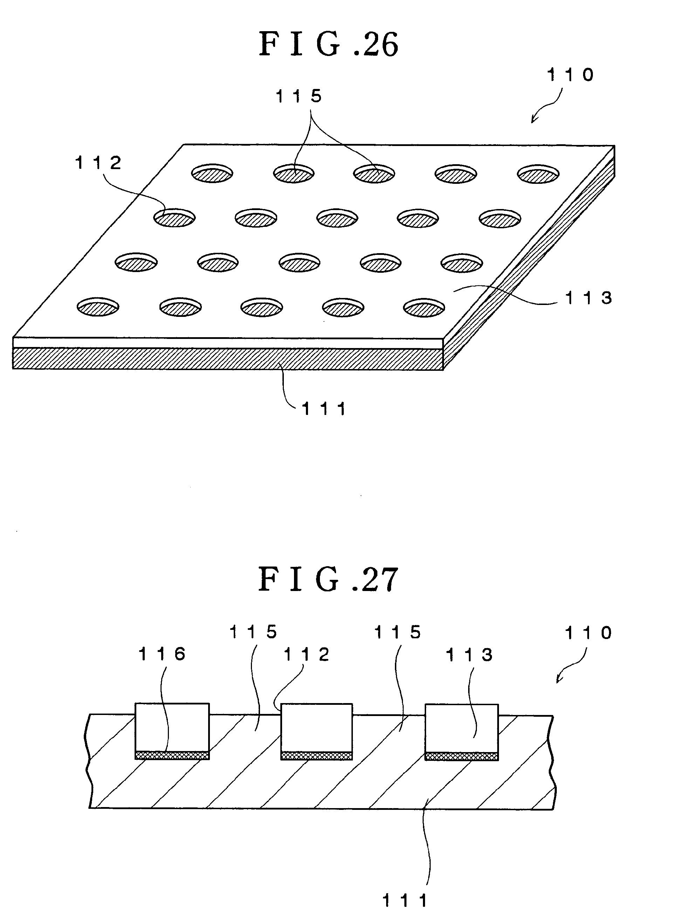

Figure 26 is a schematic perspective view showing another stimulable phosphor sheet onto which chemiluminescence data are to be transferred and Figure 27 is a schematic partial cross sectional view thereof.

As shown in Figures 26 and 27, a stimulable phosphor sheet 110 has the same configuration as that of the stimulable phosphor sheet 100 shown in Figures 22 and 23 except that a stimulable phosphor membrane 111 contains SrS system stimulable phosphor capable of absorbing and storing light energy and a binder and that a number of stimulable phosphor layer regions 115 are dot-like formed by pressing the stimulable phosphor membrane 111 into a number of through-holes 112 formed in a substrate 113 made of stainless steel.

The surface of the substrate 113 is coated with an adhesive agent 116 and the stimulable phosphor membrane 111 is pressed into a number of the through-holes 112 of the substrate 113 sandwiching the adhesive agent 116, whereby the stimulable phosphor membrane 111 is firmly bonded to the nickel substrate 113 to improve the durability of the stimulable phosphor sheet 110.

A number of the through-holes 112 are formed in the substrate 113 in the same pattern as that of a number of the absorptive regions 95 formed in the biochemical analysis unit 90 and each of a number of the through-holes 112 has the same size as that of each of a number of the absorptive regions 95 formed in the biochemical analysis unit 90.

Therefore, although not accurately shown in Figure 26, in this embodiment, about 10,000 substantially circular stimulable phosphor layer regions 115 having a size of about 0.01 mm² are dot-like formed in a regular pattern at a density of about 5,000 per cm² in the stimulable phosphor sheet 110.

As shown in Figure 27, the stimulable phosphor sheet 110 is prepared by pressing the stimulable phosphor membrane 111 into a number of the through-holes 112 of the substrate 113 in such a manner that the surface of the substrate 113 lies at a higher level than that of the surfaces of the stimulable phosphor layer regions 115.

Similarly to the stimulable phosphor sheet 100, the stimulable phosphor sheet 110 is prepared by pressing the stimulable phosphor membrane 111 into a number of the through-holes 112 of the substrate 113 by the heat press apparatus shown in Figure 24.

Chemiluminescence data recorded in a number of the absorptive regions 95 formed in the biochemical analysis unit 90 are transferred onto a number of the stimulable phosphor layer regions 115 of the stimulable phosphor sheet 110 shown in Figures 26 and 27.

When chemiluminescence data recorded in a number of the absorptive regions 95 of the biochemical analysis unit 90 are to be transferred onto a number of the stimulable phosphor layer regions 115 of the stimulable phosphor 110, a number of the absorptive regions 95 of the biochemical analysis unit 90 are first brought into contact with a chemiluminescent substrate.

As a result, chemiluminescence emission in a wavelength of visible light is selectively released from a number of the absorptive regions 95 of the biochemical analysis unit 90.

The stimulable phosphor sheet 110 is then superposed on the biochemical analysis unit 90 formed with a number of the absorptive regions 95 selectively releasing chemiluminescence emission in such a manner that a number of the stimulable phosphor layer regions 115 formed in the stimulable phosphor sheet 110 face the corresponding absorptive regions 95 formed in the biochemical analysis unit 90.

In this manner, each of the stimulable phosphor layer regions 115 formed in the stimulable phosphor sheet 110 is kept to face the corresponding absorptive region 95 formed in the biochemical analysis unit 90 for a predetermined time period, whereby a number of the stimulable phosphor layer regions 115 formed in the stimulable phosphor sheet 110 are exposed to chemiluminescence emission released from a number of the absorptive regions 95 formed in the biochemical analysis unit 90.

In this embodiment, since a number of the absorptive regions 95 of the biochemical analysis unit 90 are formed by pressing the absorptive membrane 92 into a number of the through-holes 93 formed in the substrate 94 made of stainless steel and the substrate 94 made of stainless steel capable of attenuating light energy is present around each of the absorptive regions 95, chemiluminescence emission released from the absorptive regions 95 of the biochemical analysis unit 90 during the exposure operation can be efficiently prevented from scattering in the substrate 94 of the biochemical analysis unit 90. Further, since a number of the stimulable phosphor layer regions 115 of the stimulable phosphor sheet 110 are formed by pressing the stimulable phosphor membrane 111 into a number of the through-holes 112 formed in the substrate 113 made of stainless steel and the substrate 113 made of stainless steel capable of attenuating light energy is present around each of the stimulable phosphor layer regions 115, chemiluminescence emission released from the absorptive regions 95 of the biochemical analysis unit 90 during the exposure operation can be efficiently prevented from scattering in the substrate 113 of the stimulable phosphor sheet 110. Therefore, it is possible to selectively expose only the stimulable phosphor layer region 115 each of the absorptive regions 95 faces to the chemiluminescence emission released from the absorptive regions 95 of the biochemical analysis unit 90.

Thus, chemiluminescence data are recorded in a number of the stimulable phosphor layer region 115 formed in the stimulable phosphor sheet 110 and similarly to the previous embodiment, the chemiluminescence data recorded in a number of the stimulable phosphor layer region 115 formed in the stimulable phosphor sheet 110 are read by the scanner shown in Figures 17 to 19 to produce biochemical analysis data.

According to this embodiment, when a number of the stimulable phosphor layer regions 105 formed in the stimulable phosphor sheet 100 are exposed to a labeling substance selectively contained in a number of the absorptive regions 95 formed in the biochemical analysis unit 90, since a number of the absorptive regions 95 of the biochemical analysis unit 90 are formed by pressing the absorptive membrane 92 into a number of the through-holes 93 formed in the substrate 94 made of stainless steel and the substrate 94 made of stainless steel capable of attenuating radiation energy is present around each of the absorptive regions 95, electron beams (β rays) released from the radioactive labeling substance contained in the absorptive regions 95 of the biochemical analysis unit 90 can be efficiently prevented from scattering in the substrate 94 of the biochemical analysis unit 90. Further, since a number of the stimulable phosphor layer regions 105 of the stimulable phosphor sheet 100 are formed by pressing the stimulable phosphor membrane 101 containing stimulable phosphor and a binder into a number of the through-holes 102 formed in the nickel substrate 103 and the nickel substrate 103 capable of attenuating radiation energy is present around each of the stimulable phosphor layer regions 105, electron beams (β rays) released from the radioactive labeling substance contained in the absorptive regions 95 of the biochemical analysis unit 90 can be efficiently prevented from scattering in the nickel substrate 103 of the stimulable phosphor sheet 100. Therefore, since it is possible to selectively expose only the stimulable phosphor layer region 105 each of the absorptive regions 95 faces to the electron beams (β rays) released from the radioactive labeling substance contained in each of the absorptive regions 95, even in the case where the absorptive regions 95 are formed in the biochemical analysis unit 90 at high density, it is possible to produce biochemical analysis data having a high quantitative accuracy by scanning a number of the thus exposed stimulable phosphor layer regions 105 with the laser beam 24 and photoelectrically detecting stimulated emission 45 released from the stimulable phosphor layer regions 105 of the stimulable phosphor sheet 100 with high resolution.

Further, according to this embodiment, since a number of the absorptive regions 95 of the biochemical analysis unit 90 are formed by pressing the absorptive membrane 92 into a number of the through-holes 93 formed in the substrate 94 made of stainless steel capable of attenuating light energy, when a number of the stimulable phosphor layer regions 115 formed in the stimulable phosphor sheet 110 are exposed to chemiluminescence emission selectively released from a number of the absorptive regions 95 formed in the biochemical analysis unit 90, chemiluminescence emission selectively released from a number of the absorptive regions 95 formed in the biochemical analysis unit 90 can be effectively prevented from scattering in the substrate 94 of the biochemical analysis unit 90. Moreover, since a number of the stimulable phosphor layer regions 115 of the stimulable phosphor sheet 110 are formed by pressing the stimulable phosphor membrane 111 containing stimulable phosphor and a binder into a number of the through-holes 112 formed in the substrate 113 made of stainless steel in the same pattern as that of a number of the absorptive regions 95 formed in the biochemical analysis unit 90 and the stimulable phosphor sheet 110 is superposed on the biochemical analysis unit 90 in such a manner that each of the stimulable phosphor layer regions 115 faces the corresponding absorptive region 95 formed in the biochemical analysis unit 90, chemiluminescence emission released from the absorptive regions 95 of the biochemical analysis unit 90 can be effectively prevented from scattering in the substrate 113 of the stimulable phosphor sheet 110. Therefore, since it is possible to selectively expose only the stimulable phosphor layer region 115 each of the absorptive regions 95 faces to the chemiluminescence emission released from each of the absorptive regions 95, it is possible to prevent noise from being generated in biochemical analysis data produced by photoelectrically detecting stimulated emission 45 released from the stimulable phosphor layer regions 115 of the stimulable phosphor sheet 110 in response to the stimulation with the laser beam 24 and to produce biochemical analysis data having a high quantitative accuracy.

Furthermore, according to this embodiment, since a number of the absorptive regions 95 of the biochemical analysis unit 90 are formed by pressing the absorptive membrane 92 using the calender processing apparatus into a number of the through-holes 93 formed in the substrate 94 made of stainless steel, it is possible to extremely easily produce the biochemical analysis unit 90 formed with a number of the absorptive regions 95 in a regular pattern.

Moreover, according to this embodiment, since a number of the stimulable phosphor layer regions 105, 115 of the stimulable phosphor sheet 100, 110 are formed by pressing the stimulable phosphor membrane 101, 111 containing stimulable phosphor and a binder using the heat press apparatus into a number of the through-holes 102, 112 formed in the nickel substrate 103 or the substrate 113 made of stainless steel in the same pattern as that of a number of the absorptive regions 95 formed in the biochemical analysis unit 90, it is possible to extremely easily produce the stimulable phosphor sheet 100, 110 formed with a number of the stimulable phosphor layer regions 105, 115 in a regular pattern.

The present invention has thus been shown and described with reference to specific embodiments. However, it should be noted that the present invention is in no way limited to the details of the described arrangements but changes and modifications may be made without departing from the scope of the appended claims.

For example, in the above described embodiments, as specific binding substances, cDNAs each of which has a known base sequence and is different from the others are used. However, specific binding substances usable in the present invention are not limited to cDNAs but all specific binding substances capable of specifically binding with a substance derived from a living organism such as a cell, virus, hormone, tumor marker, enzyme, antibody, antigen, abzyme, other protein, a nuclear acid, cDNA, DNA, RNA or the like and whose sequence, base length, composition and the like are known, can be employed in the present invention as a specific binding substance.

Further, the biochemical analysis unit 1 includes a number of the absorptive regions 4 formed by charging nylon-6 in number of the through-holes 3 formed in the substrate 2 made of stainless steel in the embodiment shown in Figure 1 and the biochemical analysis unit 90 includes a number of the absorptive regions 95 formed by pressing the absorptive membrane 92 formed of nylon-6 into a number of the through-holes formed in the substrate 94 made of stainless steel. However, it is not absolutely necessary to form the absorptive regions 4, 95 of the biochemical analysis unit 1, 90 of nylon-6 and the absorptive regions 4, 95 of the biochemical analysis unit 1, 90 may be formed of other kinds of absorptive materials. A porous material or a fiber material may be preferably used as the absorptive material for forming the absorptive regions 4, 95 of the biochemical analysis unit 1, 90 and the absorptive regions 4, 95 of the biochemical analysis unit 1, 90 may be formed by combining a porous material and a fiber material. A porous material for forming the absorptive regions 4, 95 of the biochemical analysis unit 1, 90 may be any type of an organic material or an inorganic material and may be an organic/inorganic composite material. An organic porous material used for forming the absorptive regions 4, 95 of the biochemical analysis unit 1, 90 is not particularly limited but a carbon porous material such as an activated carbon or a porous material capable of forming a membrane filter can be preferably used. Illustrative examples of porous materials capable of forming a membrane filter include nylons such as nylon-6, nylon-6,6, nylon-4,10; cellulose derivatives such as nitrocellulose, acetyl cellulose, butyric-acetyl cellulose; collagen; alginic acids such as alginic acid, calcium alginate, alginic acid/poly-L-lysine polyionic complex; polyolefins such as polyethylene, polypropylene; polyvinyl chloride; polyvinylidene chloride; polyfluoride such as polyvinylidene fluoride, polytetrafluoride; and copolymers or composite materials thereof. An inorganic porous material used for forming the absorptive regions 4, 95 of the biochemical analysis unit 1, 90 is not particularly limited. Illustrative examples of inorganic porous materials preferably usable in the present invention include metals such as platinum, gold, iron, silver, nickel, aluminum and the like; metal oxides such as alumina, silica, titania, zeolite and the like; metal salts such as hydroxy apatite, calcium sulfate and the like; and composite materials thereof. A fiber material used for forming the absorptive regions 4, 95 of the biochemical analysis unit 1, 90 is not particularly limited. Illustrative examples of fiber materials preferably usable in the present invention include nylons such as nylon-6, nylon-6,6, nylon-4,10; and cellulose derivatives such as nitrocellulose, acetyl cellulose, butyric-acetyl cellulose.

Furthermore, the biochemical analysis unit 1 includes a number of the absorptive regions 4 formed spaced apart from each other by charging nylon-6 in number of the through-holes 3 formed in the substrate 2 made of stainless steel in the embodiment shown in Figure 1 and the biochemical analysis unit 90 includes a number of the absorptive regions 4 formed apart from each other by pressing the absorptive membrane 92 formed of nylon-6 into a number of the through-holes formed in the substrate 94 made of stainless steel. However, it is not absolutely necessary to form the absorptive regions 4, 95 of the biochemical analysis unit 1, 90 so as to be spaced apart from each other and the biochemical analysis unit may be constituted as an absorptive substrate.

Moreover, a number of the stimulable phosphor layer regions 15, 85 of the stimulable phosphor sheet 10, 80 are formed by pressing the stimulable phosphor membrane 11, 81 containing stimulable phosphor and a binder into a number of through-holes 12, 82 formed in the nickel substrate 13 or the substrate 83 using the calender roll 18 in the embodiment shown in Figures 4 to 6 and the embodiment shown in Figure 16 and a number of the stimulable phosphor layer regions 105, 115 of the stimulable phosphor sheet 100, 110 are formed by pressing the stimulable phosphor membrane 101, 111 containing stimulable phosphor and a binder into a number of through-holes 102, 112 formed in the nickel substrate 103 or the substrate 113 using the heat press apparatus in the embodiment shown in Figures 22 and 23 and the embodiment shown in Figures 26 and 27. However, it is not absolutely necessary to press the stimulable phosphor membrane 11, 81, 101, 111 containing stimulable phosphor and a binder into a number of through-holes 12, 82, 102, 112 formed in the nickel substrate 13, the substrate 83, the nickel substrate 103 or the substrate 113 using the calender roll 18 or the heat press apparatus and the stimulable phosphor membrane 11, 81, 101, 111 containing stimulable phosphor and a binder may be pressed into a number of through-holes 12, 82, 102, 112 formed in the nickel substrate 13, the substrate 83, the nickel substrate 103 or the substrate 113 by other appropriate means. Further, instead of pressing the stimulable phosphor membrane 11, 81, 101, 111 containing stimulable phosphor and a binder, a number of the stimulable phosphor layer regions 15, 85, 105, 115 of the stimulable phosphor sheet 10, 80, 100, 110 may be formed by charging the stimulable phosphor membrane 11, 81, 101, 111 containing stimulable phosphor and a binder into a number of through-holes 12, 82, 102, 112 formed in the nickel substrate 13, the substrate 83, the nickel substrate 103 or the substrate 113.

Further, a number of the stimulable phosphor layer regions 15, 105 of the stimulable phosphor sheet 10, 100 are formed pressing the stimulable phosphor membrane 11, 101 containing stimulable phosphor and a binder into a number of the through-holes 12, 102 formed in the nickel substrate 13, 103 in the embodiment shown in Figures 4 and 5 and the embodiment shown in Figures 22 and 23 and a number of the stimulable phosphor layer regions 85, 115 of the stimulable phosphor sheet 80, 110 are formed pressing the stimulable phosphor membrane 81, 111 containing stimulable phosphor and a binder into a number of the through-holes 82, 112 formed in the substrate 83, 113 made of stainless steel in the embodiment shown in Figure 15 and the embodiment shown in Figures 26 and 27. However, it is not absolutely necessary to make the substrate 13, 83, 103, 113 of the stimulable phosphor sheet 10, 80, 100, 110 of nickel or stainless steel and the substrate 13, 83, 103, 113 of the stimulable phosphor sheet 10, 80, 100, 110 can be made of other material. The substrate 13, 83, 103, 113 of the stimulable phosphor sheet 10, 80, 100, 110 is preferably made of material capable of attenuating radiation energy and/or light energy but the material for forming the substrate 13, 83, 103, 113 of the stimulable phosphor sheet 10, 80, 100, 110 is not particularly limited. The substrate 13, 83, 103, 113 of the stimulable phosphor sheet 10, 80, 100, 110 can be formed of either inorganic compound material or organic compound material and is preferably formed of metal material, ceramic material or plastic material. Illustrative examples of inorganic compound materials include metals such as gold, silver, copper, zinc, aluminum, titanium, tantalum, chromium, steel, nickel, cobalt, lead, tin, selenium and the like; alloys such as brass, stainless, bronze and the like; silicon materials such as silicon, amorphous silicon, glass, quartz, silicon carbide, silicon nitride and the like; metal oxides such as aluminum oxide, magnesium oxide, zirconium oxide and the like; and inorganic salts such as tungsten carbide, calcium carbide, calcium sulfate, hydroxy apatite, gallium arsenide and the like. High molecular compounds are preferably used as organic compound material and illustrative examples thereof include polyolefins such as polyethylene, polypropylene and the like; acrylic resins such as polymethyl methacrylate, polybutylacrylate/polymethyl methacrylate copolymer and the like; polyacrylonitrile; polyvinyl chloride; polyvinylidene chloride; polyvinylidene fluoride; polytetrafluoroethylene; polychlorotrifluoroethylene; polycarbonate; polyesters such as polyethylene naphthalate, polyethylene terephthalate and the like; nylons such as nylon-6, nylon-6,6, nylon-4,10 and the like; polyimide; polysulfone; polyphenylene sulfide; silicon resins such as polydiphenyl siloxane and the like; phenol resins such as novolac and the like; epoxy resin; polyurethane; polystyrene, butadiene-styrene copolymer; polysaccharides such as cellulose, acetyl cellulose, nitrocellulose, starch, calcium alginate, hydroxypropyl methyl cellulose and the like; chitin; chitosan; urushi (Japanese lacquer); polyamides such as gelatin, collagen, keratin and the like; and copolymers of these high molecular materials.

Furthermore, in the above described embodiments, although the stimulable phosphor membrane 11, 81, 101, 111 and the nickel substrate 13, the substrate 83 made of stainless steel, the nickel substrate 103 or the substrate 113 made of stainless steel are bonded using the adhesive agent 16, 106, 116, it is not absolutely necessary to use the adhesive agent 16, 106, 116.

Moreover, although 19,200 substantially circular stimulable phosphor layer regions 15, 85 having a size of about 0.07 mm² are regularly formed in the stimulable phosphor sheet 10, 80 in the manner of a matrix of 120 columns x 160 lines correspondingly to the absorptive regions 4 of the biochemical analysis unit 1 in the embodiment shown in Figures 4 and 5 and the embodiment shown in Figure 16 and about 10,000 substantially circular stimulable phosphor layer regions 105, 115 having a size of about 0.07 mm² are formed in a regular pattern in the stimulable phosphor sheet 100, 110 at a density of about 5,000 per cm² in the stimulable phosphor sheet 100, 110 correspondingly to the absorptive regions 95 of the biochemical analysis unit 90 in the embodiment shown in Figures 22 and 23 and the embodiment shown in Figures 26 and 27, the shape of each of the stimulable phosphor layer regions 15, 85, 105, 115 is not limited to substantially a circular shape but may be formed in an arbitrary shape, for example, a rectangular shape.

Further, although 19,200 substantially circular stimulable phosphor layer regions 15, 85 having a size of about 0.07 mm² are regularly formed in the stimulable phosphor sheet 10, 80 in the manner of a matrix of 120 columns x 160 lines correspondingly to the absorptive regions 4 of the biochemical analysis unit 1 in the embodiment shown in Figures 4 and 5 and the embodiment shown in Figure 16 and about 10,000 substantially circular stimulable phosphor layer regions 105, 115 having a size of about 0.07 mm² are formed in a regular pattern in the stimulable phosphor sheet 100, 110 at a density of about 5,000 per cm² in the stimulable phosphor sheet 100, 110 correspondingly to the absorptive regions 95 of the biochemical analysis unit 90 in the embodiment shown in Figures 22 and 23 and the embodiment shown in Figures 26 and 27, the number or size of the stimulable phosphor layer regions 15, 85, 105, 115 may be arbitrarily selected in accordance with the purpose. Preferably, 10 or more of the stimulable phosphor layer regions 15, 85, 105, 115 having a size of 5 mm² or less are formed in the stimulable phosphor sheet 10, 80, 100, 110 at a density of 10/ cm² or less.

Furthermore, although 19,200 substantially circular stimulable phosphor layer regions 15, 85 having a size of about 0.07 mm² are regularly formed in the stimulable phosphor sheet 10, 80 in the manner of a matrix of 120 columns x 160 lines correspondingly to the absorptive regions 4 of the biochemical analysis unit 1 in the embodiment shown in Figures 4 and 5 and the embodiment shown in Figure 16 and about 10,000 substantially circular stimulable phosphor layer regions 105, 115 having a size of about 0.07 mm² are formed in a regular pattern in the stimulable phosphor sheet 100, 110 at a density of about 5,000 per cm² in the stimulable phosphor sheet 100, 110 correspondingly to the absorptive regions 95 of the biochemical analysis unit 90 in the embodiment shown in Figures 22 and 23 and the embodiment shown in Figures 26 and 27, it is not absolutely necessary to form the absorptive regions 4, 95 in a regular pattern in the biochemical analysis unit 1, 90 and, therefore, it is not necessary to form the stimulable phosphor layer regions 15, 85, 105, 115 in a regular pattern in the stimulable phosphor sheet 10, 80, 100, 110. It is sufficient for the stimulable phosphor layer regions 15, 85, 105, 115 to be formed in the stimulable phosphor sheet 10, 80, 100, 110 in the same pattern as that of the absorptive regions 4, 95 formed in the biochemical analysis unit 1, 90.

Moreover, in the above described embodiments, although the stimulable phosphor layer regions 15, 85, 105, 115 of the stimulable phosphor sheet 10, 80, 100, 110 are formed so that each of them has the same size as that of each of the absorptive regions 4, 95 formed in the biochemical analysis unit 1, 90, it is not absolutely necessary to form each of the stimulable phosphor layer regions 15, 85, 105, 115 so as to have the same size as that of each of the absorptive regions 4, 95 formed in the biochemical analysis unit 1, 90 and the size of each of the stimulable phosphor layer regions 15, 85, 105, 115 may be arbitrarily selected in accordance with the purpose. Preferably, each of the stimulable phosphor layer regions 15, 85, 105, 115 is formed in the stimulable phosphor sheet 10, 80, 100, 110 so as to be equal to or larger than the size of each of the absorptive regions 4, 95 formed in the biochemical analysis unit 1, 90.

Further, in the above described embodiments, a hybridization reaction solution 9 containing a substance derived from a living organism and labeled with a radioactive labeling substance, a substance derived from a living organism and labeled with a labeling substance which generates chemiluminescence emission when it contacts a chemiluminescent substrate and a substance derived from a living organism and labeled with a fluorescent substance such as a fluorescent dye is prepared. However, it is not absolutely necessary for the hybridization reaction solution 9 to contain a substance derived from a living organism and labeled with a radioactive labeling substance, a substance derived from a living organism and labeled with a labeling substance which generates chemiluminescence emission when it contacts a chemiluminescent substrate and a substance derived from a living organism and labeled with a fluorescent substance such as a fluorescent dye but it is sufficient for the hybridization reaction solution 9 to contain at least one labeling substance of a substance derived from a living organism and labeled with a radioactive labeling substance and a substance derived from a living organism and labeled with a labeling substance which generates chemiluminescence emission when it contacts a chemiluminescent substrate.

Furthermore, in the above described embodiments, specific binding substances are hybridized with substances derived from a living organism and labeled with a radioactive labeling substance, a substance derived from a living organism and labeled with a labeling substance which generates chemiluminescence emission when it contacts a chemiluminescent substrate and a fluorescent substance. However, it is not absolutely necessary to hybridize substances derived from a living organism with specific binding substances and substances derived from a living organism may be specifically bound with specific binding substances by means of antigen-antibody reaction, receptor-ligand reaction or the like instead of hybridization.

Moreover, in the above described embodiments, the scanner shown in Figures 8 to 15 is constituted so as to read radiation data recorded in a number of the stimulable phosphor layer regions 15, 105 formed in the stimulable phosphor sheet 10, 100 and fluorescence data of a fluorescent substance such as a fluorescent dye recorded in a number of absorptive regions 4, 95 formed in the biochemical analysis unit 1, 90, thereby producing biochemical analysis data and includes the first laser stimulating ray source 21 for emitting a laser beam 24 having a wavelength of 640 nm, the second laser stimulating ray source 22 for emitting a laser beam 24 having a wavelength of 532 nm and the third laser stimulating ray source 23 for emitting a laser beam 24 having a wavelength of 473 nm. However, it is sufficient for the scanner to be constituted so as to read radiation data recorded in a number of the stimulable phosphor layer regions 15, 105 formed in the stimulable phosphor sheet 10, 100, thereby producing biochemical analysis data and it is not absolutely necessary for the scanner to be constituted so as to read fluorescence data of a fluorescent substance such as a fluorescent dye recorded in a number of absorptive regions 4, 95 formed in the biochemical analysis unit 1, 90, thereby producing biochemical analysis data. Therefore, it is sufficient for the scanner to include the first laser stimulating ray source 21 for emitting a laser beam 24 having a wavelength of 640 nm and it is not absolutely necessary for the scanner to include the second laser stimulating ray source 22 for emitting a laser beam 24 having a wavelength of 532 nm and the third laser stimulating ray source 23 for emitting a laser beam 24 having a wavelength of 473 nm.

Furthermore, in the above described embodiments, the scanner shown in Figures 17 to 19 is constituted so as to read radiation data recorded in a number of the stimulable phosphor layer regions 85, 115 formed in the stimulable phosphor sheet 80, 110 and fluorescence data of a fluorescent substance such as a fluorescent dye recorded in a number of absorptive regions 4, 95 formed in the biochemical analysis unit 1, 90, thereby producing biochemical analysis data and includes the first laser stimulating ray source 21 for emitting a laser beam 24 having a wavelength of 640 nm, the second laser stimulating ray source 22 for emitting a laser beam 24 having a wavelength of 532 nm and the fourth laser stimulating ray source 55 for emitting a laser beam 24 having a wavelength of 980 nm. However, it is sufficient for the scanner to be constituted so as to read radiation data recorded in a number of the stimulable phosphor layer regions 85, 115 formed in the stimulable phosphor sheet 80, 110, thereby producing biochemical analysis data and it is not absolutely necessary for the scanner to be constituted so as to read fluorescence data of a fluorescent substance such as a fluorescent dye recorded in a number of absorptive regions 4, 95 formed in the biochemical analysis unit 1, 90, thereby producing biochemical analysis data. Therefore, it is sufficient for the scanner to include the fourth laser stimulating ray source 55 for emitting a laser beam 24 having a wavelength of 980 nm and it is not absolutely necessary for the scanner to include the first laser stimulating ray source 21 for emitting a laser beam 24 having a wavelength of 640 nm and the second laser stimulating ray source 22 for emitting a laser beam 24 having a wavelength of 532 nm.

Further, in the above described embodiments, biochemical analysis data are produced by reading radiation data of a radioactive labeling substance recorded in a number of the stimulable phosphor layer regions 15, 105 formed in the stimulable phosphor sheet 10, 100 and fluorescence data of a fluorescent substance such as a fluorescent dye recorded in a number of the absorptive regions 4, 95 formed in the biochemical analysis unit 1, 90 using the scanner shown in Figures 8 to 15. However, it is sufficient for a scanner for reading radiation data of a radioactive labeling substance and fluorescence data of a fluorescent substance to enable a number of the stimulable phosphor layer regions 15, 105 formed in the stimulable phosphor sheet 10, 100 and a number of the absorptive regions 4, 95 formed in the biochemical analysis unit 1, 90 to be scanned with a laser beam 24 or a stimulating ray, thereby exciting stimulable phosphor and a fluorescent substance and it is not absolutely necessary to read radiation data of a radioactive labeling substance and fluorescence data of a fluorescent substance using the scanner shown in Figures 8 to 15.

Moreover, in the above described embodiments, the scanner shown in Figures 8 to 15 and the scanner shown in Figures 17 to 19 are constituted so that all of the stimulable phosphor layer regions 15, 85, 105, 115 formed in the stimulable phosphor sheet 10, 80, 100, 110 or all of the absorptive regions 4, 95 formed in the biochemical analysis unit 1, 90 are scanned with a laser beam 24 to excite stimulable phosphor or a fluorescent substance such as a fluorescent dye by moving the optical head 35 using a scanning mechanism in the main scanning direction indicated by the arrow X direction and the sub-scanning direction indicated by the arrow Y in Figure 14. However, all of the stimulable phosphor layer regions 15, 85, 105, 115 formed in the stimulable phosphor sheet 10, 80, 100, 110 or all of the absorptive regions 4, 95 formed in the biochemical analysis unit 1, 90 may be scanned with a laser beam 24 to excite stimulable phosphor or a fluorescent substance such as a fluorescent dye by moving the stage 40 in the main scanning direction indicated by the arrow X direction and the sub-scanning direction indicated by the arrow Y in Figure 14, while holding the optical head 35 stationary, or moving the optical head 35 in the main scanning direction indicated by the arrow X direction or the sub-scanning direction indicated by the arrow Y in Figure 14 and moving the stage 40 in the sub-scanning direction indicated by the arrow Y or the main scanning direction indicated by the arrow X in Figure 14.

Further, in the above described embodiments, the scanner shown in Figures 8 to 15 and the scanner shown in Figures 17 to 19 are constituted so as to photoelectrically detect stimulated emission and fluorescence emission are detected using the photomultiplier 50 as a light detector. However, it is sufficient for the light detector used in the present invention to be able to photoelectrically detect fluorescence emission or stimulated emission and it is possible to employ a light detector such as a line CCD or a two-dimensional CCD instead of the photomultiplier 50.

Moreover, in the above described embodiments, although the scanners includes the stimulating ray sources 21, 22, 23, 55 for emitting a laser beam 24, it is not absolutely necessary to employ a laser stimulating ray source as a stimulating ray source and an LED (light emitting diode) light source may be employed as a stimulating ray source instead of a laser stimulating ray source. Further, it is possible to employ a halogen lamp as a stimulating ray source and to provide a spectral filter to cut wavelength components which cannot contribute to the excitation of stimulable phosphor.

Furthermore, in the above-described embodiments, a solution containing specific binding substances such as cDNAs are spotted using the spotting device 5 including an injector 6 and a CCD camera 7 so that when the tip end portion of the injector 6 and the center of the absorptive region 4, 95 into which a solution containing specific binding substances is to be spotted are determined to coincide with each other as a result of viewing them using the CCD camera 7, the solution containing the specific binding substances such as cDNA is spotted from the injector 6. However, the solution containing specific binding substances such as cDNAs can be spotted by detecting the positional relationship between a number of the absorptive regions 4, 95 formed in the biochemical analysis unit 1, 90 and the tip end portion of the injector 6 in advance and two-dimensionally moving the biochemical analysis unit 1, 90 or the tip end portion of the injector 6 so that the tip end portion of the injector 6 coincides with each of the absorptive regions 4, 95.

According to the present invention, it is possible to provide a stimulable phosphor sheet and a method for producing the same which can read radiation data or chemiluminescence data and produce biochemical analysis data having excellent quantitative characteristics with high resolution even in the case of forming at a high density on the surface of a carrier such as a membrane filter a plurality of spot-like regions containing specific binding substances which can specifically bind with a substance derived from a living organism and whose sequence, base length, composition and the like are known and selectively labeling the plurality of spot-like regions with a radioactive labeling substance, thereby recording radiation data therein or in the case of forming at a high density on the surface of a carrier such as a membrane filter a plurality of spot-like regions containing specific binding substances which can specifically bind with a substance derived from a living organism and whose sequence, base length, composition and the like are known and selectively labeling the plurality of spot-like regions with a labeling substance which generates chemiluminescence emission when it contacts a chemiluminescent substrate, thereby recording chemiluminescence data therein.

## Claims

1. A stimulable phosphor sheet formed with a plurality of stimulable phosphor layer regions formed by charging a stimulable phosphor membrane containing stimulable phosphor and a binder into a plurality of through-holes formed in a plate-like member to form the plurality of stimulable phosphor layer regions at positions corresponding to those of the plurality of through-holes of the plate-like member.

2. A stimulable phosphor sheet in accordance with Claim 1 wherein the plurality of stimulable phosphor layer regions are formed by pressing the stimulable phosphor membrane containing stimulable phosphor and a binder into the plurality of through-holes formed in the plate-like member.

3. A stimulable phosphor sheet in accordance with Claim 2 wherein the plurality of stimulable phosphor layer regions are formed by pressing the stimulable phosphor membrane containing stimulable phosphor and a binder into the plurality of through-holes formed in the plate-like member using a heat press process.

4. A stimulable phosphor sheet in accordance with Claim 3 wherein the plurality of stimulable phosphor layer regions are formed by pressing the stimulable phosphor membrane containing stimulable phosphor and a binder into the plurality of through-holes formed in the plate-like member using a calender roll process.

5. A stimulable phosphor sheet in accordance with any one of Claims 2 to 4 wherein the plurality of stimulable phosphor layer regions are formed by pressing the stimulable phosphor membrane containing stimulable phosphor and a binder into the plurality of through-holes formed in the plate-like member and the plate-like member and the stimulable phosphor membrane are bonded with an adhesive agent.

6. A stimulable phosphor sheet in accordance with any one of Claims 1 to 4 wherein the plate-like member is made of a material capable of attenuating radiation energy.

7. A stimulable phosphor sheet in accordance with Claim 6 wherein the plate-like member is made of a material that reduces the energy of radiation to 1/5 or less when the radiation travels in the plate-like member by a distance equal to that between neighboring stimulable phosphor layer regions.

8. A stimulable phosphor sheet in accordance with Claim 7 wherein the plate-like member is made of a material that reduces the energy of radiation to 1/10 or less when the radiation travels in the plate-like member by a distance equal to that between neighboring stimulable phosphor layer regions.

9. A stimulable phosphor sheet in accordance with Claim 8 wherein the plate-like member is made of a material that reduces the energy of radiation to 1/100 or less when the radiation travels in the plate-like member by a distance equal to that between neighboring stimulable phosphor layer regions.

10. A stimulable phosphor sheet in accordance with any one of Claims 1 to 9 wherein the plate-like member is made of a material capable of attenuating light energy.

11. A stimulable phosphor sheet in accordance with Claim 10 wherein the plate-like member is made of a material that reduces the energy of light to 1/5 or less when the light travels in the plate-like member by a distance equal to that between neighboring stimulable phosphor layer regions.

12. A stimulable phosphor sheet in accordance with Claim 11 wherein the plate-like member is made of a material that reduces the energy of light to 1/10 or less when the light travels in the plate-like member by a distance equal to that between neighboring stimulable phosphor layer regions.

13. A stimulable phosphor sheet in accordance with Claim 12 wherein the plate-like member is made of a material that reduces the energy of light to 1/100 or less when the light travels in the plate-like member by a distance equal to that between neighboring stimulable phosphor layer regions.

14. A stimulable phosphor sheet in accordance with any one of Claims 7 to 13 wherein the plate-like member is made of a material selected from a group consisting of a metal material, a ceramic material and a plastic material.

15. A stimulable phosphor sheet in accordance with Claim 14 wherein the plate-like member of the stimulable phosphor sheet is formed of plastic material in which metal particles are dispersed.

16. A stimulable phosphor sheet in accordance with any one of Claims 1 to 15 wherein the stimulable phosphor sheet is formed with 10 or more stimulable phosphor layer regions.

17. A stimulable phosphor sheet in accordance with Claim 16 wherein the stimulable phosphor sheet is formed with 1,000 or more stimulable phosphor layer regions.

18. A stimulable phosphor sheet in accordance with Claim 17 wherein the stimulable phosphor sheet is formed with 10,000 or more stimulable phosphor layer regions.

19. A stimulable phosphor sheet in accordance with any one of Claims 1 to 18 wherein each of the plurality of stimulable phosphor layer regions is formed to have a size of less than 5 mm².

20. A stimulable phosphor sheet in accordance with Claim 19 wherein each of the plurality of stimulable phosphor layer regions is formed to have a size of less than 1 mm².

21. A stimulable phosphor sheet in accordance with Claim 20 wherein each of the plurality of stimulable phosphor layer regions is formed to have a size of less than 0.1 mm².

22. A stimulable phosphor sheet in accordance with any one of Claims 1 to 21 wherein the plurality of stimulable phosphor layer regions are formed at a density of 10 or more per cm².

23. A stimulable phosphor sheet in accordance with Claim 22 wherein the plurality of stimulable phosphor layer regions are formed at a density of 1,000 or more per cm².

24. A stimulable phosphor sheet in accordance with Claim 23 wherein the plurality of stimulable phosphor layer regions are formed at a density of 10,000 or more per cm².

25. A stimulable phosphor sheet in accordance with any one of Claims 1 to 24 wherein the plurality of stimulable phosphor layer regions are formed in a regular pattern.

26. A method for manufacturing a stimulable phosphor sheet comprising the steps of forming a stimulable phosphor membrane containing stimulable phosphor and a binder and charging the stimulable phosphor membrane into a plurality of through-holes formed in a plate-like member, thereby forming a plurality of stimulable phosphor layer regions at positions corresponding to those of the plurality of through-holes.

27. A method for manufacturing a stimulable phosphor sheet in accordance with Claim 26, which comprises a step of pressing the stimulable phosphor membrane containing stimulable phosphor and a binder into the plurality of through-holes formed in the plate-like member and forming the plurality of stimulable phosphor layer regions.

28. A method for manufacturing a stimulable phosphor sheet in accordance with Claim 27, which comprises a step of pressing the stimulable phosphor membrane containing stimulable phosphor and a binder into the plurality of through-holes formed in the plate-like member using a heat press process and forming the plurality of stimulable phosphor layer regions.

29. A method for manufacturing a stimulable phosphor sheet in accordance with Claim 28, which comprises a step of pressing the stimulable phosphor membrane containing stimulable phosphor and a binder into the plurality of through-holes formed in the plate-like member using a calender roll process and forming the plurality of stimulable phosphor layer regions.

30. A method for manufacturing a stimulable phosphor sheet in accordance with any one of Claims 26 to 29, which comprises a step of pressing the stimulable phosphor membrane containing stimulable phosphor and a binder into the plurality of through-holes formed in the plate-like member, forming the plurality of stimulable phosphor layer regions and bonding the plate-like member and the stimulable phosphor membrane with an adhesive agent.

31. A method for manufacturing a stimulable phosphor sheet in accordance with any one of Claims 26 to 30 wherein the plate-like member is made of a material capable of attenuating radiation energy.

32. A method for manufacturing a stimulable phosphor sheet in accordance with Claim 31 wherein the plate-like member is made of a material that reduces the energy of radiation to 1/5 or less when the radiation travels in the plate-like member by a distance equal to that between neighboring stimulable phosphor layer regions.

33. A method for manufacturing a stimulable phosphor sheet in accordance with any one of Claims 26 to 32 wherein the plate-like member is made of a material capable of attenuating light energy.

34. A method for manufacturing a stimulable phosphor sheet in accordance with Claim 33 wherein the plate-like member is made of a material that reduces the energy of light to 1/5 or less when the light travels in the plate-like member by a distance equal to that between neighboring stimulable phosphor layer regions.

35. A method for manufacturing a stimulable phosphor sheet in accordance with any one of Claims 31 to 34 wherein the plate-like member is made of a material selected from a group consisting of a metal material, a ceramic material and a plastic material.

36. A method for manufacturing a stimulable phosphor sheet in accordance with Claim 35 wherein the plate-like member of the stimulable phosphor sheet is formed of plastic material in which metal particles are dispersed.

37. A method for manufacturing a stimulable phosphor sheet in accordance with any one of Claims 26 to 36 wherein the plate-like member is formed with 10 or more through-holes and the stimulable phosphor sheet is formed with 10 or more stimulable phosphor layer regions.

38. A method for manufacturing a stimulable phosphor sheet in accordance with any one of Claims 26 to 37 wherein each of the plurality of through-holes is formed in the plate-like member to have a size of less than 5 mm² and each of the plurality of stimulable phosphor layer regions is formed in the stimulable phosphor sheet to have a size of less than 5 mm².

39. A method for manufacturing a stimulable phosphor sheet in accordance with any one of Claims 26 to 38 wherein the plurality of through-holes are formed in the plate-like member at a density of 10 or more per cm² and the plurality of stimulable phosphor layer regions are formed in the stimulable phosphor sheet at a density of 10 or more per cm².

40. A method for manufacturing a stimulable phosphor sheet in accordance with any one of Claims 26 to 39 wherein the plurality of through-holes are formed in the plate-like member in a regular pattern and the plurality of stimulable phosphor layer regions are formed in the stimulable phosphor sheet in a regular pattern.
